(19) Europäisches Patentamt
European Patent Office
Office européen des brevets

(11) **EP 3 540 606 B1**

(12) **EUROPEAN PATENT SPECIFICATION**

(45) Date of publication and mention
of the grant of the patent:
**29.09.2021  Bulletin 2021/39**

(51) Int Cl.:
***G06F 16/2455*** (2019.01)

(21) Application number: **19162960.9**

(22) Date of filing: **14.03.2019**

(54) **PRODUCT DELIVERY SYSTEM AND METHOD**

PRODUKTLIEFERANLAGE UND VERFAHREN

SYSTÈME ET PROCÉDÉ DE FOURNITURE DE PRODUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2018  FR 1852213**
**15.03.2018  US 201815922356**

(43) Date of publication of application:
**18.09.2019  Bulletin 2019/38**

(73) Proprietor: **Amadeus S.A.S.**
**06410 Biot (FR)**

(72) Inventors:
• **BECKER, Muriel**
**06130 GRASSE (FR)**
• **LAPERROUSAZ, Vincent**
**06570 SAINT PAUL (FR)**
• **PAUCHET, David**
**06580 PEGOMAS (FR)**

(74) Representative: **Marks & Clerk France**
**Immeuble "Visium"**
**22, avenue Aristide Briand**
**94117 Arcueil Cedex (FR)**

(56) References cited:
**US-A1- 2013 073 586**

• **HANS-PETER KRIEGEL: "Performance comparison of index structures for multi-key retrieval", MANAGEMENT OF DATA, ACM, 2 PENN PLAZA, SUITE 701 NEW YORK NY 10121-0701 USA, 1 June 1984 (1984-06-01), pages 186-196, XP058240079, DOI: 10.1145/602259.602284 ISBN: 978-0-89791-128-3**
• **YAGOUB K ET AL: "Caching Strategies for Data-Intensive Web Sites", PROCEEDINGS OF THE INTERNATIONAL CONFERENCE ON VERY LARGEDATA BASES, XX, XX, 10 September 2000 (2000-09-10), pages 1-12, XP002242551,**

**Description**

TECHNICAL FIELD

The invention generally relates to client/server architectures and, in particular, to systems, methods and computer systems for delivering products to a client device in response to a client request.

BACKGROUND

Over the past decades, the Internet has dramatically revolutionized the architecture of computerized systems. In particular, the Internet has transformed conventional content provider systems into dynamic and highly interactive online systems using client/server architectures.

Modern content provider systems use one or more server computing devices (also referred to as server devices or servers) which receive client requests from client computing devices (also referred to as client devices) through a dedicated user interface via a communication network, as disclosed for example in US 2013/073586 A1. A user can accordingly directly submit a request (also referred to as a query) using a client device for content through the dedicated user interface to access content such as a product. The server device can search for one or more candidate products that satisfy the user request, using a search engine, and return a response to the client device through the dedicated interface. The response can comprise the list of candidate products (also called product proposals or solutions) determined by the search engine and various information related to each candidate product. The user can then select one product among the candidate products and initiate a purchase transaction to purchase the product.

Some existing content provider systems also provide auxiliary products also called "complementary products" or "services" in connection with the delivered products. Such ancillary services can be directly provided by the content provider system or provided by another indirect content provider system.

For example, the content provider system may be a travel provider system which determines the best journey options in response to a user request for a travel, the user specifying on a user interface a set of parameter requests such as a date, a departure geographical location and an arrival geographical location, and possibly additional user preferences (e.g. cost criteria, connections, etc.). The user can thus access the dedicated user interface of the travel management system and submit a travel request to obtain travel information and/or buy a travel product (travel booking) such as a flight product for a given itinerary at a given date. In some situations, the user can need additional services related to the travel product such as optional services related to the travel (e.g. meal service, seat related services, pet transport service, etc.).

The search engine of conventional content provider systems use important resources to process each user request, such processing requiring a huge number of accesses to data stored in several databases or cache resources and to determine candidate products, thereby resulting in high computational cost.

To optimize the computational cost of the search engine, different approaches were proposed. A first approach is based on a limitation of the search domain in which the search engine determines the candidate solution using an optimized search algorithm or pre-filtering.

Another existing approach consists in using pre-computed data to limit the computations required to process each request.

To optimize the resources of the content provider system (booking or purchasing system for example), still another existing approach has been proposed which is based on the use of a "pre-transaction" content provider system (as also called "pre-booking", "pre-purchasing", or "pre-shopping" system for example) connected to the transaction system to provide product recommendations in a pre-transaction phase (also referred to as a "recommendation" or "pre-processing" phase). The pre-transaction content provider system (also referred to as a pre-transaction system hereinafter) provides product information to a client device derived from statistical data in response to a user request. More specifically, instead of computing the response to each request in real-time from up-to-date databases, the pre-transaction content provider system uses statistical data related to previously purchased products over a past period. Similarly to the transaction content provider system, the pre-transaction content provider system returns candidate products (for example travel proposals) to the client device, the information associated with the products (such as the product price for example) being thus determined from past transactions. Further, the pre-transaction content provider system can process a request even if a limited number of request parameters are inputted by the user. The user has thus access to statistical information about available products without a need for the search engine to process the requests in real time and access to multiple databases. If the user wishes to perform a transaction (buy or book a product), he can select a product in the interface dedicated to the pre-transaction content provider system to be redirected to the content provider system or can directly access to the content provider system.

Currently, such pre-transaction systems can only provide information about the direct products (main products) delivered by the content provider system because they handle a huge volume of product related data. Conventional pre-transaction systems do not generally provide information about complementary products (i.e. services) related to a product (such as for example the service availability in connection with a product and service price). In some cases, they can at most provide very limited and not fully accurate ancillary services information. Because of the relationship between an ancillary service and a product, setting values for a service (service values or prices) requires linking such values to the product value (product price), which involves an exponential processing complexity.

However, in some situations, a user will only complete/validate a transaction (i.e. purchase a product) if specific services are available. Exemplary services in the travel field include for example additional room, availability of vegetarian meal, availability of Video-On-Demand during a flight, animal travel options, etc.. Accordingly, after accessing the pre-transaction system, a user may submit several transaction requests to the transaction content provider system, access to the product proposals and check the service options. The user may finally decide not to proceed with the transaction because of unavailability of specific service(s), or submit additional requests to the transaction content provider system with different parameters to try to find products with the desired service(s) at the best price. This results in additional computational cost at the transaction system. Such additional cost is all the more important as linking services with products as such requires important computational resources with several accesses to different databases at the server side. Such load of the transaction system can limit its performances, the processing time of the requests and its quality of service. The user experience can be deeply impacted by such a slow processing rate, thereby deterring the users from completing the transaction or inducing them to turn to another content provider system.

Improved systems and methods for delivering products and services connected to the products that limit the overload of the content provider system are accordingly needed.

SUMMARY

In order to address these and other problems, there is provided a server system as claimed in claim 1. Embodiments of the server system are defined by the dependent claims.

There is further provided a method and a computer program product for determining a list of products in response to a client request received from a client device during a request/response session as claimed in claims 13 and 14.

BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention:

- Figure 1 depicts an example of an operational environment of a pre-transaction content provider system 10, according to some embodiments.

- Figure 2 represents an operational environment of a pre-transaction travel provider system 10 (referred to hereinafter as a "pre-booking system"), according to an exemplary application of the invention to the travel field.

- Figure 3 represents an exemplary implementation of a pre-transaction system, according to some embodiments.

- Figure 4 is a diagram depicting an exemplary Massive Search Platform.

- Figure 5 schematically depicts a tree data structure, according to some embodiments.

- Figure 6 is a flowchart depicting the process of determining a service set, according to a pull mode embodiment.

- Figure 7 is a flowchart depicting the process of determining a list of service sets, according to a push mode embodiment.

- Figure 8 is a flowchart depicting the process of commuting service estimation mode, according to some embodiments.

- Figure 9 is a flowchart depicting the process of pre-determining services sets, according to some embodiments.

- Figure 10 is a flowchart depicting the process of correlating services, according to some embodiments.

- Figure 11 represents an exemplary operating environment in which one or more components of the pre-transaction system may be implemented, according to an embodiment.

DETAILED DESCRIPTION

Embodiments of the invention provide a server system and a method for determining a list of products in response to a client request received from a client device, in a computer environment, during a request/response session, the list of products (also called product recommendations) comprising a list of the candidate main products that satisfy the client request and for at least one main product one or more auxiliary products (also referred to hereinafter as "services" or "ancillary services") related to the main product proposed to the client device. Embodiments of the invention have particular advantages when the request/response session corresponds to a pre-transaction phase, the invention enabling integration of service recommendations in association with each product recommendation determined in response to the client request, during such pre-transaction phase,

As used herein, the term "pre-transaction" refers to a phase prior to a transaction flow implemented in a transaction system, a transaction flow starting from a user request received by the transaction system for a product specified by the parameters of the request and terminated by a purchase operation of a product through the transaction system (the term "transaction" is also referred to as "purchase", "shopping" or "booking"). In a client server architecture, a "transaction" corresponds to a request/response session initiated by a client request and terminated by the purchase of a product (selection of a main product by the user and validation of the selection by payment of the price value associated with the product). The product transaction may comprise a main product and an associated auxiliary product set (service set) comprising one or more auxiliary products (services) related to the main product, the overall value (total price) of the transaction comprising the value of the main product added to the value of the service set.

As used herein, a pre-transaction phase is initiated by one or more user requests (which may be "open" requests) and returns a list of estimated candidate products (also called product "recommendations") delivered by the transaction system which are likely to be available using various data which may include statistical data. Such statistical data may be used to provide more information in case a given set of services has not been pre-computed. A pre-transaction phase thus returns statistical information about the products.

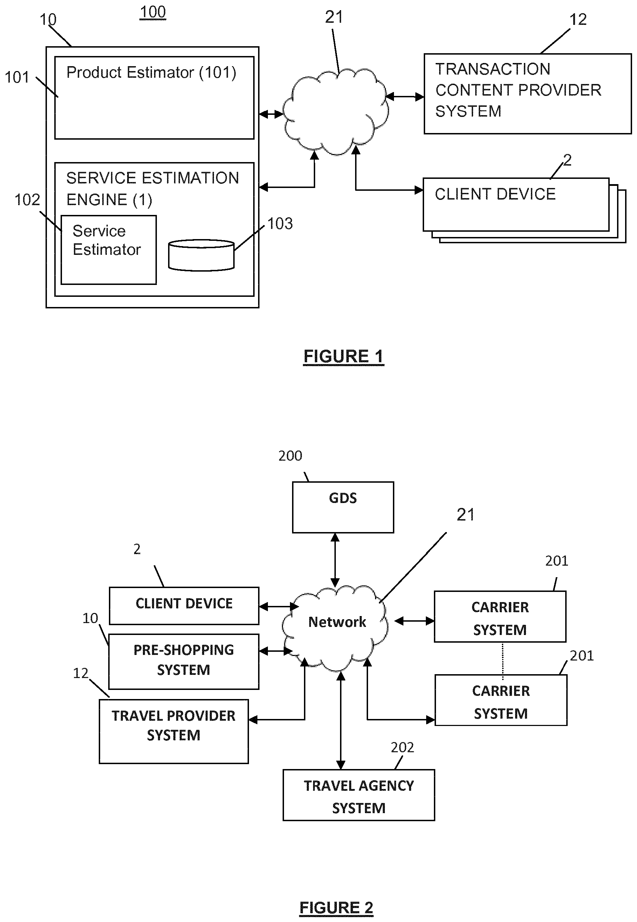

With reference to figure 1, an example operational environment 100 of a pre-transaction content provider system 10 is shown, according to some embodiments.

The pre-transaction content provider system 10 (also referred to hereinafter as a pre-transaction system or "server system") is configured to determine a set of candidate product recommendations to a user device 2 in response to a user request (referred to as a pre-transaction request) identifying one or more request parameters among a set of request parameters predefined by a request format, in a pre-transaction phase.

In one embodiment, the pre-transaction content provider system 10 may host one or more websites and/or have a hosting service host one or more websites.

As used herein, the term "content" refers to any content that is provided to a user device through a user interface in the form of products, each product being possibly associated with one or more services ("ancillary services") related to the products. Each product is defined by a set of parameters depending on the application field of the invention, and a value (price). A representation of such content may be generated on a Graphical User Interface using various representation elements such as electronic text, images, pictures, audio recordings, and other data forms which can be processed, stored, and returned.

Each client device 2 (also referred to hereinafter as a "user device") may be a personal computing device, a tablet computer, a thin client terminal, a smartphone, and/or other such computing device. Each client device 2 may host web browsers and/or custom applications software (e.g., a client system) and may include a client user interface.

Each user device 2 may further include a web-browser application that communicates with a web-server application hosted by the pre-transaction system 10.

The pre-transaction system 10 may communicate with one or more "transaction" content provider systems 12 (also referred to as a "transaction system" 12) via a dedicated network 21 to enable the pre-transaction system 10 to access historical data maintained by each transaction system 12.

Each transaction system 12 may be configured to process in real-time user requests (also called "transaction" requests) using a search engine configured to access in real-time to one or more content databases. It is further adapted to perform transactions with a user (such as booking or purchasing of a product and possibly of services associated with the product). A transaction for a product is completed when a user proceeds with the payment of the product and of the optional services. In some embodiments, the transaction system 12 may be configured to only process user requests which comprise a set of mandatory request parameters.

A user operating one of the user devices 2 may directly interface with the pre-transaction system 10 using a dedicated pre-transaction user interface during a client/server session. In some embodiments, the pre-transaction system 10 may be configured to redirect a user device 2 to a dedicated interface of the transaction system 12, in response to a selection of a product by a user. The user may further directly interface with the transaction content provider system 12 using the dedicated pre-transaction user interface.

The transaction content provider system 12 may store a user account if the user is already registered, or alternatively may comprise no data related to the user if the user has not previously created a user account.

The pre-transaction system 10 and the transaction system 12 are dedicated to the same application field (for example, the travel field). Both the pre-transaction and the transaction systems 10 and 12 may be configured to determine candidate products of the same type. However, they relate to different transaction phases. Further, while the transaction content provider system 12 may comprise a search engine implementing a search algorithm to search products matching a request in one or more content databases, the pre-transaction system 10 may comprise a product estimator 101 configured to estimate the products solutions (candidate products) to a user request by searching statistics data related to past transactions performed at the transaction system 12, without a need to access to the multiple content databases. Accordingly while the responses returned by the pre-transaction system 10 is based on historical data, the responses returned by the transaction content provider system 12 may be based on real-time data retrieved from content databases. The pre-transaction system 10 thus limits the load of the transaction content provider system 12, a user desiring to have a view of the possible product options being able to submit an open request to the pre-transaction system 10, refine his or her request depending on the results returned by the pre-transaction system 10, and submit the refined request to the transaction content provider system 12 if the user decide to proceed with a transaction.

In some embodiments, the pre-transaction system 10 (server system) comprises a service estimation engine 1 (also called "auxiliary product estimation engine") configured to estimate service recommendations in response to a pre-transaction request. The service estimation engine 1 may comprise a service estimation database 103 configured to store historical data related to sets of services (also referred to as "auxiliary products" or "complementary products"), the historical data being represented by a tree data structure comprising nodes. The service estimation engine 1 may further comprise a service estimator 102 (also referred to as an "auxiliary product estimator") configured to determine from the tree data structure an occurrence frequency and an auxiliary product value information for each service set in a list of auxiliary product sets, in response to the client request. The list of service sets may comprise at least one service set (a service set may be also referred hereinafter as an "auxiliary product set"), the pre-transaction system 10 being configured to further provide a list of candidate auxiliary products for each main product determined in response to the client request using the occurrence frequency and the service value determined for each auxiliary product set of the list of auxiliary product sets.

The pre-transaction system 10 may be configured to provide service recommendations for each candidate product using the occurrence frequency and the service value determined for each service set of the list of service sets.

In one embodiment, the client request may be received by the pre-transaction system 10 at a given processing time, and each service set may identify one or more auxiliary products related to a main product. In such embodiment, the historical data comprises data collected from previous request/response sessions (previous transactions), each previous transaction being implemented between a client device and a product provider system connected to the service estimation database 103 during a predefined time period before the processing time.

In an exemplary application of the invention to the travel field, the pre-booking system 10 may be configured to provide travel recommendations for travel products (candidate travel products), such as airline travel products.

A travel request has a predefined format defining a set of request parameters including:

- departure location/date/time parameters;
- arrival location/date/time parameters;
- additional travel related parameters.

The request parameters for the transaction travel provider system 12 (also referred to hereinafter as a "booking" or "shopping" system) may include "mandatory" and/or "optional" request parameters, the mandatory request parameters being required by the "booking" system to be able to process the request. The optional request parameters may include for example the user preferred language, or refining parameters (e.g. time of day, preferred company). Generally, the pre-transaction travel provider system 10 (also referred to hereinafter as a "pre-booking" or "pre-shopping" system) can launch a request without any requirement regarding mandatory request parameters. For example, the processing of a request can be initiated for any request comprising at least one request parameter.

A travel request parameter may have a typology (for example "departure location", "arrival location"), a data category (e.g. location, date), a data type (e.g. char) and/or a data format (defined for example by IATA standard, IATA standing for "International Air Transport Association").

Embodiments of the invention may be implemented by one or more computing system comprising one or more networked computers or servers. The computing systems may provide processing and database functions for the pre-transaction and transaction content provider systems 10 and 12.

The pre-transaction system 10 and the transaction content provider system 12 may host one or more websites and/or have a hosting service host one or more websites.

The communication network 21 may include one or more private and/or public networks (e.g., the Internet) that enable the exchange of data such as the Internet, a local area network (LAN), a wide area network (WAN), a cellular voice/data network, one or more high speed bus connections, and/or other such types of communication network. Each communication network 21, 22 may use standard communications technologies and/or protocols such as 4G, Ethernet, 802.11, TCP/IP (Transmission Control Protocol/Internet Protocol, HTTP (Hypertext Transport Protocol), FTP (File Transfer Protocol), etc. Data can be exchanged over each network 21, 22 according to different data exchange technologies and/or formats such as the hypertext markup language (HTML) and the extensible markup language (XML).

The pre-transaction system 10 may comprise a redirection function to redirect the user to the Internet Domain of the transaction system 12 using an associated URL, in response to a selection made by the user of a candidate product to enable him to complete a transaction. In some embodiments, the pre-transaction system device 10 may send a request corresponding to the user selection to the transaction system 12 using a URL of a predefined type which may comprise a set of fields such as a Body, the content provider system identifier field such as a Chain field, additional fields related to the request parameters (name/value pairs) as selected by the user. The skilled person will readily understand that the invention is not limited to such specific fields in the request URL and may include different fields depending on the application of the invention.

Figure 2 represents the operational environment of a pre-transaction travel provider system 10 (referred to hereinafter as a "pre-booking system") according to an exemplary application of the invention to the travel field. The environment may include a Global Distribution System (GDS) 200, one or more indirect product provider systems 20, such as carrier systems 201, one or more travel shopping or indirect seller systems (auxiliary content provider systems), such as a travel agency system 202, a pre-transaction provider system 10, a transaction provider system 12 and one or more client devices 2. Each of the GDS 200, the carrier systems 201, the indirect seller system 202, the pre-transaction system 10 and the transaction system 12, and the user device 2 may communicate through the network 21. The carrier systems 201 may each include a Computer Reservation System (CRS) and/or billing system for the respective airline that enables the GDS 200 and/or indirect seller system 202 to reserve and pay for airline tickets. The carrier systems 201 may also interact with each other, either directly or through the GDS 200, to enable a validating carrier to sell tickets for seats provided by an operating carrier. The operating carrier may then bill the validating carrier for the services provided.

The GDS 200 may be configured to facilitate communication between the carrier systems 201 and indirect seller systems 202 by enabling travel agents, validating carriers, or other indirect sellers to search for available segments and book reservations on one or more carrier systems 21 via the GDS 200. To this end, the GDS 200 may maintain links to each of the carrier systems 201 via the network 62. These links may allow the GDS 200 to obtain scheduling and availability data for segments from the carrier systems 201, and travel proposal reservation requests to the carrier systems 201. The carrier and travel agency systems 201, 202 may thereby book flights, trains, or other types of segments on multiple carriers via a single connection to the GDS 200. The GDS 200 may store and/or maintain a Passenger Name Record (PNR) that includes a complete set of data for an itinerary of a trip, including segments from multiple carriers and/or other travel services comprising the trip such as hotel and rental car reservations.

A travel agency system 202 may include a web server that provides a publicly accessible website. This website may be configured to provide access to travel planning features, such as the ability to search for travel products matching a travel request. To this end, the travel agency system 202 may provide the traveler with access to data from one or more databases hosted by the GDS 200, carrier systems 201, and the travel agency system 202. In an alternative embodiment of the invention, the travel agency system 202 may be a proprietary system that limits access to travel service providers or travel agents, in which case access may be provided through a private website or other application.

The transaction travel provider system 12 may be in communication with the travel agency system 202 via the network 62 or some other suitable connection. In alternative embodiments of the invention, all or a portion of the travel provider system 2 may be integrated into one or more of the other systems 200, 201, 202. Travelers or travel agents may use the travel agency system 202 to generate and/or search for travel proposals that satisfy a travel request received from the traveler using the travel provider system 2.

The GDS 200, carrier systems 201, the travel agency system 202, the travel provider system 12, and the user devices 2 of the operating environment may be implemented on one or more computing devices or systems, referred to collectively as a computer.

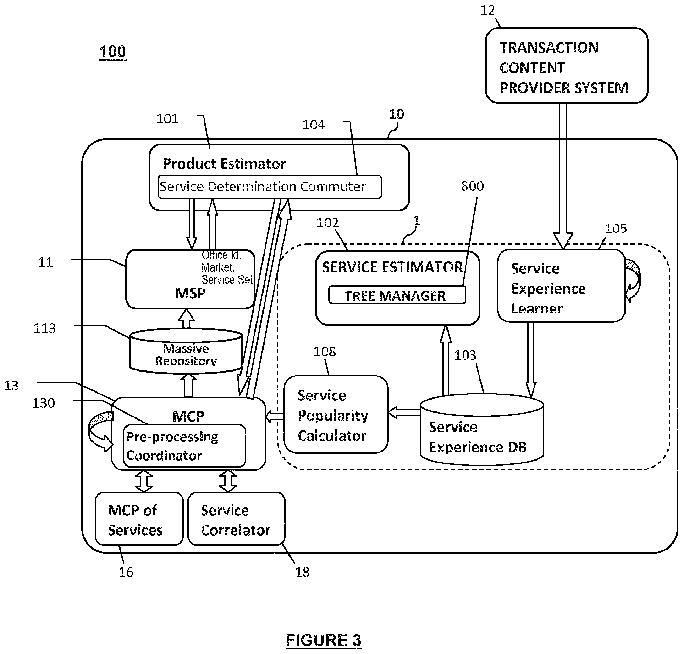

Figure 3 represents an exemplary implementation of the pre-transaction system 10. As shown in figure 3, the pre-transaction system 10 may comprise or be connected to a distributed search platform MSP 11 (MSP is the acronym for Massive Search Platform) configured to store pre-computed product values. The MSP platform 11 may comprise one or more distributed machines, each machine comprising one or more computing systems. Figure 3 only depicts a logical view of the MSP platform while the MSP platform may be physically spread across a set of distributed machines. The MSP platform 11 may be configured to store the best product values of a set of content provider systems 12 providing products for all the days of the year to come, which may include several possible product value per day.

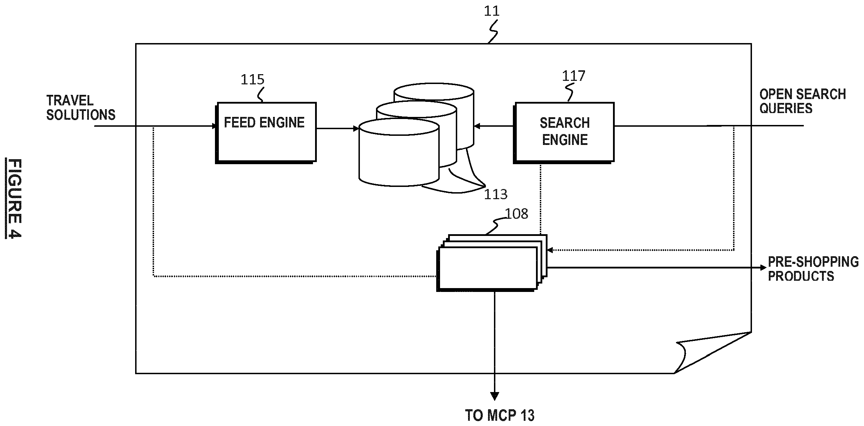

Figure 4 shows an exemplary MSP platform 11 in the field of travel delivery. In such example, the MSP platform 11 may be configured to store and search travel recommendations, each travel recommendation identifying a candidate product (e.g. flight), the candidate product being associated with a product value (or product "price") according to an exemplary embodiment of the present invention. The stored travel recommendations may be spread over all the machines which are connected to the MSP platform. The MSP platform 11 may comprise one or more data bases 113 for storing air travel recommendations which may be logically grouped into groups of recommendations. Although a static view is shown in figure 4, the skilled person will readily understand that the databases 113 may be physically stored across the different machines.

The MSP platform 11 may further comprise a Feed engine 115 configured to index groups of pre-computed air travel recommendations (for example, travels corresponding to a same itinerary defined by a city pair) and store them in one of the machine in the distributed system.

The MSP platform 11 may also comprise a search engine 117 configured to locates groups of data among the physical machines and provides index search information to process the requests originating from user devices 2.

In some embodiments, the MSP platform 11 may comprise a set of business-oriented analysis engines 108. Each business-oriented analysis engine 108 may be configured to optimize the hardware cost of the platform by determining the optimal number of recommendations to re-compute every day with as accurate as possible pre-computed prices using various process such as feed and search operation analysis, various data such as generate metrics on volatility and quality of data stored in the system. An exemplary implementation of an MSP 11 is described in patent application US20130073586 A1.

Turning back to figure 3, in some embodiments, the environment may further comprise a Massive Computation Platform 13 or MCP. The analysis engines of the MSP 11 may transmit data to the MCP 13. The pre-transaction system 10 may comprise or be connected to the MCP 13. The MCP 13 may be configured to compute candidate products (e.g. as flights), and product value information, such as prices, at a massive scale. More specifically, the MCP 13 may be configured to process pre-transaction requests although a limited number of request parameters is provided. In an exemplary application of the invention to the travel field, the MCP 13 may interact with other internal services provided by a GDS 200. The MCP 13 may process request with a high degree of freedom although no mandatory request parameters are specified (e.g. travel date parameter or origin and/or destination location or operating carrier in an exemplary application of the invention to the travel field). The MCP 13 may perform data processing optimization based on a global request analysis.

The MCP 13 may be organized according to a batch model comprising resources which can be dynamically instantiated. The subsystem performs data processing optimization based on a global queries analysis.

In an exemplary application of the invention to the travel field, the MCP 13 may include one or more Massive Masters and a plurality of Massive Working engines. The Massive Masters may be configured to globally analyze the requests which are then decomposed into optimized requests. The optimized requests thus obtained may be then processed by one or more of the Massive Working engines. Each Massive Working engine may return the result of the optimized request processing to the originating Massive Master(s), which assembles the results into candidate products (such as travel solutions), each candidate product including a product value (e.g. travel price).

The MCP 13 may be further configured to perform a global analysis for identifying redundancies (request redundancies) between the received requests to avoid useless reprocessing. This may include merging of redundant queries parts depending on predefined performance requirements.

The MSP 11 and the MCP 13 may be part of a distributed search platform connected to a set of transaction travel provider system 12 (such as airline systems, travel agency systems, etc.). Each transaction travel provider system 12 may define which part of their product domain is to be integrated into the search platform. In exemplary application to travel delivery, each transaction travel provider system 12 may then send to the MCP 11 a "massive" query comprising a series of computation orders, each order defining the markets to consider (such as a list of city pairs for all days of the year to come in the travel field) and the type of product recommendations to generate (e.g. for every day, the best recommendations for journeys between 1 and 20 days long). Such orders can be updated by the transaction travel provider system 12 or can serve as a basis for a periodic computation. The MCP 13 may use internal functions of the GDS 200 to compute the requested recommendations, such as a journey retrieval function to retrieve a list of existing flights, a pricing function to find the best combination of fares and products (e.g. flights), an availability function to determine the products available for booking or purchasing.

As the recommendations are generated for the transaction travel provider system 12, the recommendations may be stored in a global cache (Massive Repository 113) of pre-computed travel recommendations, thereby becoming available for future users' search requests. The Massive Repository 113 may be used to store the recommendations computed by the MCP 13. The search amongst the possible solutions is done by the MSP 11.

The pre-transaction system 10 allows a user to submit open requests from a dedicated user interface displayed on a user device. An open pre-transaction request submitted by a user to a pre-transaction travel system may be for example *"where can I go?", "what can I do for what I want to spend?"*. As used herein, an "open" request refers to a request defined by a set of request parameters, a request parameter value being specified by the user only for a limited subset of the request parameters which may comprise only one request parameter. The pre-transaction system 10 may return a response in the form of candidate products that satisfy the open request. The user may select a candidate product on the same search page, without a need to directly connect to the transaction travel provider system and specify all the mandatory request parameters (e.g. destination location, departure date, etc.).

The pre-transaction system 10 according to some embodiments of the invention makes it possible for a user to select a product depending on the estimated availability and price associated with given service(s) at a pre-transaction phase.

In one embodiment, the user may specify the desired services in the submitted pre-transaction request in a "pull" mode. Alternatively, the user may be dynamically returned service recommendations (also referred to as service "recommendations") associated with a product, without specification of a service set by the user, based on pre-computed popularity indicators associated with each service ("push mode").

A product (also referred to herein as a "main product") may be associated with product information identifying the product (for example, a flight travel product is associated with a city pair, departure/arrival date, departure/arrival time), and a product value representing the price at which a product is available for purchase. A product may be further associated with a set of services comprising at least one service.

A service or "ancillary service" (also referred to herein as an "auxiliary product" or "complementary product") related to a given main product may be associated with service information identifying the service, availability information indicating whether the service is available for the product and a service value representing the price of the service.

A "service set" refers to a plurality of services which can be purchased or booked together with a product by a user during a transaction between the client device of the user and a transaction system 12.

The service value (service price) associated with an ancillary service related to a given product may be dependent on the product. For example, the price of an ancillary service related to a travel product may depend on several parameters such as :

- the initial complexity of the number of product price results in the pre-booking system 10; for example, considering one customer, 500 destinations, 300 dates, 10 stay durations, the number of product prices is equal to :

$$\text{destinations x 300 dates x 10 stay durations} = 1,500,000 \text{ Prices ;}$$

- the ancillary service dimension; for example, considering the search of one airline proposing 20 different services and considering that the customer may be interested in any set of services among those 20 services, the corresponding ancillary service dimension may be equal to $2^{20} = 10^6$ ancillary services; The combination of the price results dimension (1,500,000) with the ancillary services dimension ($10^6$) leads to $1.5 \times 10^{12}$ prices, in such example.

It should be noted that other parameters related to the travel product associated with an ancillary service may influence the price of the ancillary service, such as for example:

- the type of the product to which the ancillary service is related (e.g. equipment, type of plane);

- the location information of the product (the location information of a product may impact the price);

- the sale strategy of the product provider (promotion campaign for example);

- The category of the product (a category may include for example long flights, business class, economy class).

Computing all the possible prices according to conventional approaches requires a huge number of resources, with a long processing due to data volatility.

The pre-transaction system 10 according to some embodiments of the invention provides service recommendations in the pre-transaction flow while limiting the number of price results to be processed in order to match operational constraints.

In some embodiments, the service estimation engine 1 may be configured to determine ancillary service recommendations for each candidate product returned in response to a product recommendation request.

In some embodiments, the service estimator 102 of the service engine 1 may be configured to pre-compute information related to services such as service availability and service price using information maintained in the service experience database 103. The service estimator 102 may receive the context of a pre-transaction request (e.g. defined by a destination parameter and a date parameter for a travel preprocessing request) and use a search tree structure to determine an occurrence frequency and a service value information (price information) for a specified service set if the pre-transaction request comprises a specification of a service set ("pull" mode), or for a list of service sets (most popular service sets) if the pre-transaction request does not comprise any specified service set ("push" mode).

In a preferred embodiment, the pre-transaction system 10 may also comprise a Service Determination Commuter 104 (also referred to as "service determination commuter") configured to select an ancillary service determination mode in response to a user pre-transaction request. The ancillary service determination modes may include one of the following modes :

- A service information extraction mode, such mode selection by the Commuter 104 triggering the retrieval of pre-processed information related to a service set as may be stored in a database 113 by the MSP 11;

- A service determination mode, such mode selection by the Commuter 104 triggering the processing of the pre-transaction request by the Service Estimator 102.

The Commuter 104 enables an optimization of the computational cost of request processing by identifying the service values (service prices) to be computed with respect to the service values that can be estimated using live traffic. In some embodiments, the Service Determination Commuter 104 may be activated in response to a recommendation request received by the pre-transaction system 10 to determine a service estimation mode. The Service Determination Commuter 104 may be configured to transmit contextual data derived from a received recommendation request either to the MCP 11 or to the service estimator 102 depending on the determined service estimation mode. The Service Determination Commuter 104 may receive back information related to ancillary services the MCP 11 or to the Service Estimator 102, such information being used to generate ancillary service recommendations for each candidate product, the candidate product recommendations being determined by the Massive Search platform (MSP) 13.

In one embodiment, the Massive Search platform (MSP) 13 may comprise a pre-processing coordinator 130 configured to compute requests from real traffic data to feed the massive repository, for all the origin/destination and set of services, at minimum cost.

The service estimation engine 1 may further comprise a learning unit 105 (also referred to as a "Service Experience Learning" unit or "SEL") configured to collect meta-learning data related to auxiliary services availability and value (price) from real-time transactions.

The service experience database 103 is organized according to a tree data structure. The Service Estimator 102 uses such tree data structure to search for ancillary services to be recommended to a user in association with a candidate product satisfying the request. The Service Estimator 102 implements a search algorithm based on such tree data structure, the search algorithm being such that it optimizes the computational costs of the search. The Service Estimator 102 may comprise a tree manager 800 configured to dynamically manage the tree data structure 8. The skilled person will readily understand that although the tree manager 800 is implemented in the Service Estimator 102 in figure 3, in some alternative embodiments, the tree manager 800 may be implemented as a separate block of the service estimation engine 1 or be implemented in another block of the service estimation engine 1.

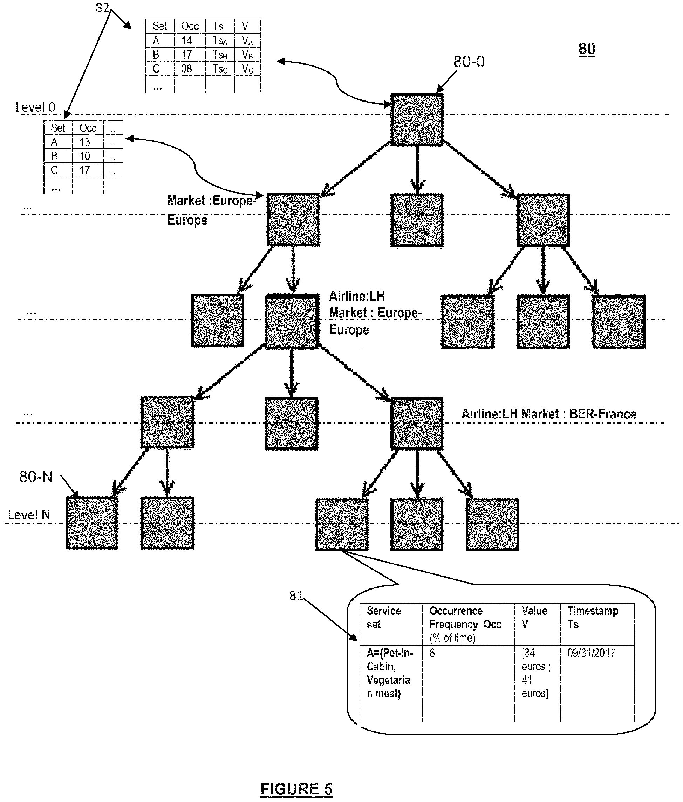

Figure 5 schematically depicts a tree data structure 8 according to some embodiments.

The tree data structure 8 (also referred to as a "tree") comprises a plurality of nodes 80 with each level (also referred to as a "layer") of the tree corresponding to a parameter related to one or more request parameters predefined by the request format, as handled by the transaction content provider systems 12. The tree data structure 8 thus modelizes the different dimensions of a client request.

More specifically, each level of the tree which is associated with a request parameter.

Each node at a given level of the tree, with the level being associated with a given request parameter, may thus correspond to a value ("node value") of the request parameter and may be associated with an integer value ("counter value") representing the number of occurrences of the request parameter value among the requests received by the transaction system 12 over a predefined past period T with respect to a processing time. The first node of the tree 80-0 is referred to as the root node. A node which does not have any child node is referred to as a "leaf" node (for example 80-N). Each node has at most one parent node located above it in the tree (i.e. in the previous level of the node). The root node being the highest node in the tree, it does not have any parent node. The depth (also called dimension) of a given node designates the length of the path from the considered node up to the root node of the tree. Each path from the root node to a leaf node represents a set of values corresponding to criteria (or parameters) of a request and thereby represents a past product request. The depth of a leaf node is inferior or equal to the maximal number of request parameters that can be specified in a user request according to the request format defined by the transaction systems 12. A node may be designated by its node value (request parameter value). A node 80 may be also referred to hereinafter as $n_i^k$, with $i$ representing the level of the tree ($i = 0$ corresponding to the root node) and $k$ representing the $k$-th node of level $i$. The counter value of a node $n_i^k$ will be denoted $c_{n_i}k$. Thus, the node value $n_i^k$ has been specified $c_{n_i}k$ times, during the past period. According to the notations used herein, the child nodes of a node $n_i^k$ are designated by the nodes $n_{i+1}^1, n_{i+1}^2, ..., n_{i+1}^P$, with $p$ representing a number of values specified by users during the past period $T$ for the request parameter corresponding to level $i - 1$.

An exemplary client request in the field of travel product provider systems may be for example:

"provide all round trip recommendations to Canada, for a gold tier level pax, departing on Saturday or Sunday with a stay of 2 weeks, with an average monthly temperature at destination greater than 25 degrees, with services={pet in cabin, vegetarian meal}".

In response to the completion of the transaction initiated by such client request, the tree manager 800 may update the tree data structure. To update the tree data structure, the tree manager 800 may be configured for example to divide the received client request into the following tokens:

A- "Round trip"
B- "1 gold tier level pax"
C- "Saturday or Sunday departure"
D- "2-week stay"
E- "North America destination"
F- "Canada destination"
G- "Canada destination with temperature > 20 degrees"
H- "Temperature > 25 degrees"
I- "Services= {pet in cabin, vegetarian meal}".

The tree manager 800 may then update the values of the different levels, from these tokens.

As shown by this example, the tree levels may either exactly match one request criterion (A, C, D, E, H, I), match several request criteria (B), match a subset of one request criterion (F), or match a subset of several request criteria (G).

The tree data structure 8 thus captures the context of transaction user requests of the live traffic (also called "real-time" traffic) at the transaction system 12 within the nodes and the branches of the tree. The tree data structure 8 may be further configured such that the leaf nodes of the tree are associated with a service set parameter representing a set of services purchased in association with the product defined by the upper levels. Each leaf node of the tree may thus correspond to a set of services (comprising one or more services) purchased in the past period $T$ together with the product defined by the path from the root node to the node preceding the considered leaf node. The set of services may be defined by a combination of services {[service 1] and [service 2] and ... [service p] }.

Ancillary service estimation may be all the more accurate as the tree depth increases.

In some embodiments, additional information may be associated with each node. Such additional information may be used to maximize factorization and accordingly the time required to perform a search using the tree.

In one embodiment, a set of tree criteria may be dynamically added or removed based on the number of child nodes.

The tree data structure 8 may be configured so that the upper the level of the tree, the more discriminative the request parameter associated with the level. This limits the computational cost of a search using the tree.

For example, in an application of the invention to travel product delivery, the tree data structure may for example comprise:

- A first level ($i = 1$) corresponding to the mainland pair of a travel request defined by an "origin mainland" and a "destination mainland" (e.g. a value of the mainland pair may be "Europe, Europe");

- A second level ($i = 2$) corresponding to the journey controlling carrier(s) of the travel parameter (e.g. a value of the journey controlling carrier may be "LH", standardized name for Lufthansa);

- A third level ($i = 3$) corresponding to the location pair of a travel request defined by an "origin location" and a "destination location" (e.g. a value of the country pair may be "BER"-France, with BER being the standardized name for BERLIN);

- A fourth level ($i = 4$) corresponding to the services set associated with a product defined by the previous level node values (e.g. a value of the service set may be a ["pet in cabin"] service and ["vegetarian meal"] service).

In some embodiments, each tree leaf $n_L^k$ of the tree data structure corresponding to a previously requested service set may additionally comprise :

- a counter $c_{n_L}^k$ defining the number of times the service set value has been requested to the transaction content provider system 12 by a user during a past period $T;$ and/or

- A plurality of service set values; each service set value (also referred to as "service set price") may comprise price information related to the price at which the corresponding service set, denoted {[*service* 1] *and* [*service* 2] *and* ... [*service p*]}, has been purchased during a purchase transaction related to the product defined by the path from the root node to the leaf node $n_N^k$ during the past period *T;* in one embodiment, each service set value (service set price) may comprise a list of price values representing the list of price values at which the service set has been purchased over the past period; in another embodiment, each service set value (service set price) may comprise a list of price ranges corresponding to the range of prices at which the service set value has been purchased during the past period, the range of price being defined by a lower threshold representing the lower purchase price of the service set and an upper threshold representing the upper purchase price of the service set.

The following description of some embodiments will be made with reference to leaf nodes comprising each a service set value in the form of a value range (or price range).

Each leaf node $n_L^k$ of the tree data structure corresponding to a given service set may further comprise a timestamp representing the time of the last update of the leaf node, that is the last date at which a price has been determined for the service set associated with the leaf node (the timestamp may include the date and time of the update).

Figure 5 shows exemplary data 81 comprised at each leaf node associated with an exemplary set of service A={Pet-In-Cabin, Vegetarian meal} including:

- An occurrence frequency : 6% (service set request 6 % of time for the request defined by the path of the leaf node)

- A price range: [34 euros; 41 euros]

- A timestamp Ts: 09/31/2017.

In some embodiments, each node 80 of the tree data structure (different from the leaf nodes) may be further associated with aggregated leaf node data 82 which may be locally stored at the node or stored in a storage unit connected to the tree manager 800. Although figure 5 shows exemplary leaf node data 82 for only two nodes 80, for simplification purpose, the skilled person will readily understand that similar data can be comprised at the other nodes of the tree (different from leaf nodes). The leaf node data comprise aggregated data from the leaf nodes located in the subtree defined by the node 80 (below node 80). The leaf node data thus comprise aggregated data related to the service set associated with the subtree defined by the node 80, such as the following data for each service set:

- an aggregated occurrence frequency Occ,

- an aggregated value information *V* (also referred to as an 'aggregated price information'), such as for example an aggregated value range, and possibly

- an aggregated timestamp representing the last update of the service set.

For a given service set, the aggregated occurrence frequency refers to the sum of the occurrence frequencies associated with the service set over all the leaf nodes located below node 80.

In one embodiment, the aggregated value information *V* comprised in a leaf node may be an aggregated value range (also referred to as an 'aggregated price range') denoted [*Pmin, Pmax*], defined for the service set associated with the leaf node. The price range may be defined by a lower threshold *Pmin* and an upper threshold *Pmax,* the lower threshold *Pmin* representing the lower value (price) assigned to the service set among the values (prices) associated with the service set in the leaf nodes located below the node 80 and the upper threshold *Pmax* representing the upper value assigned to the service set among the values (prices) associated with the service set in the leaf nodes located below the node 80.

It should be noted that the invention is not limited to an aggregated value information *V* implemented as an aggregated value range [*Pmin, Pmax*]. Alternatively, the aggregated value information *V* may be :

- an average value (also referred to as an average price'), or
- a median value (also referred to as a median price'), or
- a range based on unitary values (also referred to as unitary prices') in which extreme values are removed (for example, the 0-10 and 90-100 percentiles can be removed), or a sorted list of values (prices) comprising values sorted by decreasing occurrence frequencies.

In still another embodiment, the aggregated value information *V* stored by a leaf node may comprise all possible values (or 'prices') in association with their number of occurrences.

The following description of some embodiments of the invention will be made with reference to an aggregated value information *V* implemented as an aggregated value range [*Pmin, Pmax*], for illustration purpose only.

For a given service set, the aggregated timestamp value refers to the more recent timestamps among the timestamps associated with the service sets which correspond to the leaf nodes below the node 80.

By aggregating at each node of the tree data related to the service sets associated with the leaf nodes located below the node, the computational costs of ancillary service estimation can be reduced.

In one embodiment, in response to a pre-transaction request specifying a given service set, the service estimator 102 may be configured to browse the tree data structure 8 according to a tree search algorithm (such as for example a Best-First search algorithm) to determine a matching node having a path in the tree matching the parameters of a pre-transaction request, and search for a leaf node in a subtree of the matching node that matches the given service set and that has an occurrence frequency satisfying a threshold condition at the lowest possible level of the tree data structure. The product associated with the given service set is thus defined by the path from the root node to the matching node. The Service Estimator 102 may determine the service value information from the data comprise in the determined leaf node. In one embodiment, the occurrence frequency of a leaf node may be determined to satisfy the threshold, if the occurrence frequency is greater or equal to a predefined threshold.

More specifically, the service estimator 102 may be configured to search for a leaf node $n_L{}^k$ in the subtree of the matching node that matches the given service in the last possible level *L* of the tree data structure, and having enough occurrence (i.e the leaf node has an occurrence frequency satisfying the threshold condition).

In one embodiment, to determine the service value information, if a tree leaf $n_L{}^k$ in a level *L* (with $L \geq N$) is determined to match the given service set {[service 1] and [service 2] and ...[service p]}, the Service Estimator 102 may be configured to determine the range of service set values (service set prices) associated with the service set {[service 1] and [service 2] and ...[service p]} in the tree leaf $n_l{}^k$ during the past period *T*.

The range of service set values may thus correspond to the range of prices paid by users for this product during the past period *T*.

For example, a price range of [34 Euros - 41 Euros] may be associated with the service set {[pet in cabin" service] and [vegetarian meal service]}.

In some embodiments, the counter $c_{n_L}{}^k$ associated with a leaf node of the tree may be used by the Service Estimator 102 to derive a statistical value representing the occurrence frequency of a service set over the past period *T*. For example, an occurrence frequency of the service set {[pet in cabin" service] and a [vegetarian meal service]} may be equal to 6% of time.

In one embodiment, a tree rebuilding algorithm (also called "balancing" algorithm) may be applied to the tree data structure 8 to obtain an as balanced as possible tree data structure starting from any node. A tree is balanced if:

- For each node of the tree, the heights of the left subtree and right subtree heights differ by at most one, and

- The left subtree is balanced, and

- the right subtree is balanced.

Turning back to figure 3, the Service Experience Learner 105 may be configured to capture the availability status and service value of each ancillary service associated with the products offered by the transaction system 12 using real-time transaction data. The Service experience learner 105 may store the collected information in the form of the tree data structure of the Service Experience database 103. In some embodiments, the Service experience learner 105 may be configured to collect data on service requests, when the MSP 11 fails to provide information.

The Service experience learner 105 may be scheduled to self-reorganize the Service Experience database 103 according to a predefined period or automatically in response to the detection of an update condition.

In one embodiment, the Service Experience Learner 105 may collect information from a fare review step of the transaction flow performed by the transaction system 12. As used herein, the fare review refers to the step prior to the validation of a transaction by a user during which a user is requested to review the fare information related to a product purchase (prior to the step where a user is requested to enter user personal information). In such a phase, the context of a transaction request is known at the transaction system 12, thereby enabling to use the parameter of the request to update the tree data structure in the service experience database 103. This further enables collecting information late enough in the transaction flow to have a sufficiently specified product (for example a fixed itinerary for a travel product) and thus gather accurate service information. Further, this enables to collect information early enough in the transaction flow to have a maximum of transaction traffic.

For each transaction request submitted to the transaction system 12, the Service Experience Learner 105 may be configured to browse the tree of the Service Experience Database 103 from the root node to the leaf node, determine if the parameters of the request match a node value at each level until the last node before the leaves is reached (*i = N* - 1), the service experience learner 105 being configured to update a node if a match is found or create a new node if parameter values are not created in the tree.

In particular, the service experience learner 105 may be configured to increment the counter associated with a node value of the tree, in response to finding a match between a parameter (e.g. airline website, controlling carrier, location pair, etc.) of the request and the node value, thereby allowing storage of the full context in the tree.

In one embodiment, to determine if a match exists in the tree for a parameter (e.g. airline website, controlling carrier, location pair, etc.) of a given transaction request submitted to the transaction system 12 specifying a given product and a given service set, the service experience learner 105 may determine if a leaf already exists for the given service set in the tree which has an associated path corresponding to the parameters of the request related to the product. If a match is found, the node corresponding to the leaf may be updated by incrementing the counter associated with the leaf. The Service Experience Learner 105 may be also configured to store additional data related to the service set such as the full context and one or more service set values (e.g. elementary price for each service [*service k*] of the service set). If no match has been found between a leaf of the tree and the service set specified in the transaction request, the Service Experience Learner 105 may create a new leaf (new node) for the service set of the transaction request, set the counter of the created node to 1. It may further store in the newly created lead additional data related to the service set such as the full context and one or more service set values (e.g. elementary price for each service [*service k*] of the service set).

In one embodiment, the Service Experience Learner 105 may launch a tree checking process to check the configuration of the tree and identify if the tree is unbalanced, according to a predefined checking period, such as every *M* updates of the tree. The checking process fails when it is detected that the tree is unbalanced. In some embodiments, a tree rebuilding algorithm may be applied to balance the tree.

In one embodiment, the tree checking period may be predefined by a system administrator. In some embodiments, the tree checking period may be updated during operation of the Service Experience Learner 105 or dynamically adjusted depending on update criteria. If the Service Experience Learner 105 detects that the tree is unbalanced, it may apply a balancing algorithm to reorganize the tree.

In some applications of the invention, the conventional Massive Computation Platform MCP 13 cannot pre-process all ancillary service possibilities due to the complexity of the computation. To limit the computational cost of ancillary service information (service availability, service price), the service estimation engine 1, according to some embodiments, may comprise a Service Popularity Calculator 108. The Service Popularity Calculator 108 may be configured to only compute recommendations for ancillary services related to each candidate product among a subset of services ("popular service subset"), each service of the popular service subset being selected based on a popularity indicator computed for the service which represents the likelihood for the service of being requested by users.

The Service Popularity Calculator 108 may be configured to receive the context of the pre-processing request (also referred to as a "recommendation" or "pre-transaction" request), and use the tree data structure to determine the most requested service sets over a past period (most popular services).

The Service Popularity Calculator 108 may use the Service Experience Database 103 to determine the popularity indicators associated with each service. In some embodiments, the Service Popularity Calculator 108 may use criteria (also referred to as "input context" for the Service Popularity Calculator 108) related to the products specified for each transaction system 12 to determine the popularity indicators (e.g. criteria related to dates, and/or stay duration, and/or airline, and/or city pair, etc. for a travel product). Accordingly, the popularity indicator of a service may be set to a high value if the related product is frequently requested during a given time period.

In one embodiment, considering n possible transactions types t1, ...,tn for requesting a service set S, the popularity indicator may be determined from the parameter Popularity(S) defined as:

$$\text{Popularity(S)} = \sum_{i=1}^{i=n} w_i occ_i \quad (1)$$

In formula (1), $w_i$ designates the weight associated to ti, $occ_i$ designates the occurrence frequency of requests having the transaction type ti and having requested S over period of time

For example, considering a travel provider system, the transaction types may include :

- a preshopping request type $T_1$;

- a shopping request type $T_2$;

- a pricing request type $T_3$.

As used herein, a "node context" for a given node refers to the information defining the path of the node from the root node to the given node.

For each input context defined by the request criteria of a received user request, the Service Popularity Calculator 108 may browse the tree data structure 8 of the Service Experience Database 103 tree starting from the root node according to a tree search algorithm to find a node Nd ("current node") at the last possible level of the tree :

- having a child node matching the request criteria (first condition) and

- a leaf node below the child node associated with a service set having an occurrence frequency which is at least equal to a predefined threshold Q (second condition).

The Service Popularity Calculator 108 may be configured to determine then the frequencies of occurrences $c_{n_i}^k$ of all the service sets (Pull mode) or of the specified service set (Push mode) from the selected current node Nd. In some embodiments, the Service Popularity Calculator 108 may send the occurrence frequencies of the service set(s) thus determined to the MCP 11.

The MCP 11 may be configured to refine the input context by adding the service sets determined by the Service Popularity Calculator 108 and the occurrence frequency associated with each determined service set(s).

The Service Estimator 102 may be configured to determine ancillary services using historical data stored in the Service Experience Database 103 for each recommended (or candidate) product delivered by a transaction content processing system 12.

The Service Estimator 102 may receive from the Service determination Commuter 104 an input, in response to a service estimation mode being activated by the Service determination Commuter 104. The input sent by the Service determination Commuter 104 to the Service Estimator 102 may comprise contextual data (such as Office ID, market for an exemplary application of the invention to travel delivery) derived from a recommendation request submitted to the pre-transaction system 10, and possibly information related to an ancillary service set comprising at least one service, if a "pull mode" is activated by the user (the user thus specifies in the recommendation request that he or she wishes recommendations for candidate product associated with the ancillary service set). Alternatively, the processing of the Service Estimator 102 may be triggered dynamically in push mode, without any service set specification by the user.

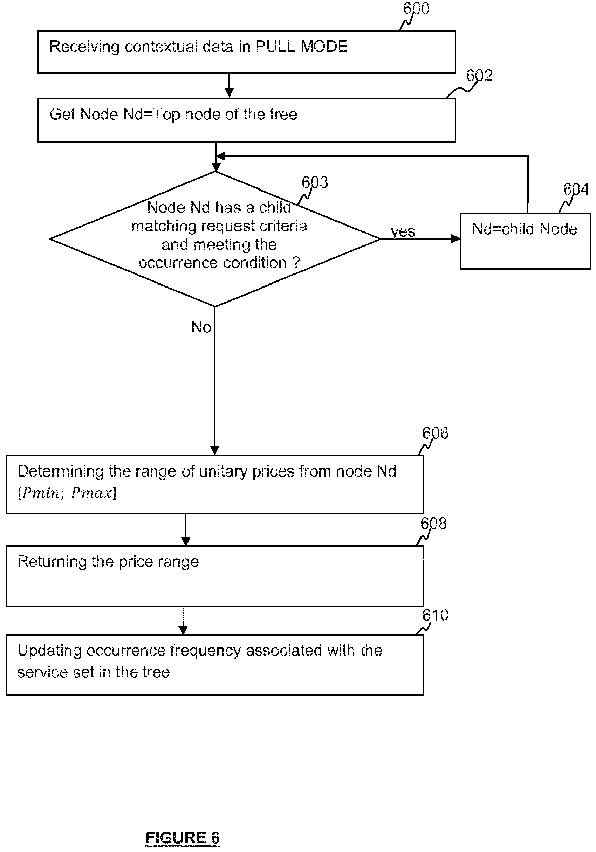

Figure 6 is a flowchart depicting the process of determining a candidate service set recommendation, which may be implemented by the Service Estimator 102, according to a pull mode embodiment.

In step 600, an input is received from the Service Determination Commuter 104 comprising contextual data defining parameters of a requested product and specification of a service set derived from a recommendation request submitted by a user device to a pre-transaction processing device 10.

In step 602, the tree data structure 8 of the Service Experience Database 103 is browsed using a tree search algorithm starting from the root node until a node Nd is reached that satisfies the set of node conditions (block 603) including:

- the first condition which is met if a child node of the node Nd has a context matching the input context, or in other word if such child node matches the criteria of the request received from the user (input request); and

- the second condition which is met if the child node of the current node Nd has the specified service set, and the service set is associated with a occurrence frequency equal or greater to a minimum number *Q*.

In a PULL mode embodiment, the request criteria used to evaluate the first condition include the service set specified by the user.

The parameter *Q* designates the minimum number of occurrences. The parameter *Q* may be predefined, configurable by an administrator, or dynamically updated.

In an embodiment, to test the first condition, the leaf node data associated with each node may be used to optimize the cost of the search, the leaf node data 82 providing data related to each set of services associated with a leaf node in the subtree defined by a given node in the tree (for example, for each service set associated with a leaf node in a subtree of the node, the occurrence frequency Occ, price range V, timestamp Ts). In such embodiment, each parent node aggregates the service set data stored in the leaf nodes located below the parent node.

If the current node $N_d$ satisfies the first and second conditions, the browsing of the tree is continued (step 604).

Otherwise, if the first and second conditions are not satisfied, the last browsed node Nd is selected, and in step 606, the range of unitary prices [*Pmin; Pmax*] of the requested service set may be determined from the service value information associated with the service set in the aggregated data associated with node $N_d$ or retrieved from a storage memory if the range has been pre-computed. Each range of unitary prices [*Pmin; Pmax*] may comprise a lower limit *Pmin* representing the minimum price of the elementary services constituting the requested service set and an upper limit *Pmax* representing the maximum price of the elementary services constituting the service set.

In step 608, the range of unitary prices [*Pmin; Pmax*] determined for the requested service set from the tree data structure 8 may be returned to the Service Determination Commuter 104.

The method may comprise a further step 610 of incrementing the occurrence frequency associated with the service set in the corresponding leaf node, and of updating accordingly the aggregated data associated with nodes in the upper levels of the tree of such leaf node.

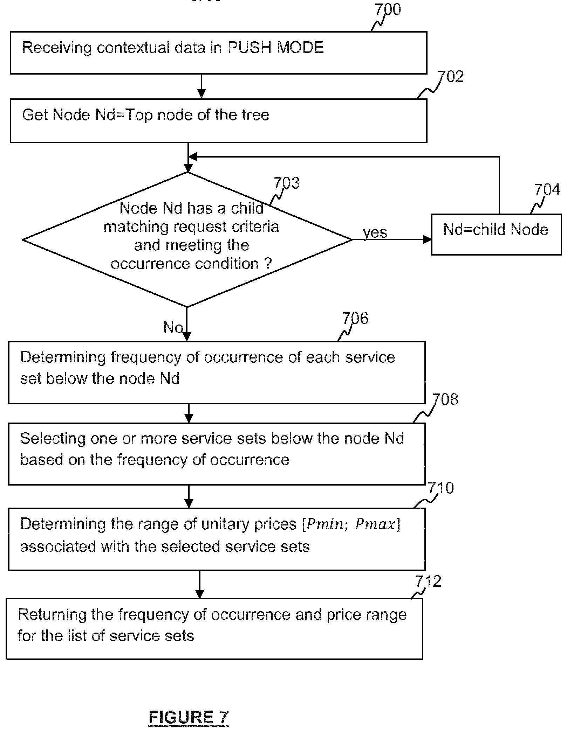

Figure 7 is a flowchart depicting the process of determining a list of candidate service set recommendations, which may be implemented by the Service Estimator 102, according to a push mode embodiment.

In push mode, no service set is specified in the recommendation request submitted to the pre-transaction system 10.

Push modes parameters may be predefined such as the maximal number of service sets returned to the user.

In step 700, an input is received from the Service determination Commuter 104 comprising contextual data defining parameters of a requested product derived from a recommendation request submitted by a user device to a pre-transaction processing device 10, without specification of any service set (PUSH MODE). The input may further comprise the expected number *N* of service sets to be pushed.

Steps 702 to 704 are similar to steps 602 to 604 of figure 6. However, as no service set is specified in the input request in push mode, the criteria of the request used to determined a child node in step 702 (first condition) do not include a specified service set.

Accordingly, in step 702, the tree data structure 8 of the Service Experience Database 103 is browsed using a tree search algorithm starting from the root node until a node Nd is reached that satisfies the set of node conditions (block 703) including:

- the first condition which is met if a child node of the node Nd has a context matching the input context, or in other word if such child node matches the criteria of the request received from the user (input request); and

- the second condition which is met if the child node of the current node Nd has at least *N* service sets associated with a occurrence frequency equal or greater to a minimum number *Q*.

This enables selecting the node Nd that satisfies the first and second conditions at the lowest possible level of the tree.

If the first and second conditions are not satisfied, the last browsed node Nd satisfying the two conditions is selected.

In step 706, the frequencies of occurrences of the service sets associated with the leaf nodes located below the selected node Nd may be determined, for example using the leaf node data 82 associated with node Nd. In some embodiments, if two different service sets have the same occurrence frequency, the timestamp associated with the service sets may be used to select the service set having the later timestamp (for which a price value have been more recently determined).

In step 708, one or more service sets may be selected based on the occurrence frequency associated with the service sets. This provides a filtered list of service sets (most popular service sets). In an embodiment, step 708 may comprise selecting the service sets associated with an occurrence frequency superior or equal to a predefined threshold.

In step 710, the range of unitary prices [*Pmin; Pmax*] associated with each service set selected in step 708 may be determined, for example from the leaf node data 82. Each range of unitary prices [*Pmin; Pmax*] comprises a lower limit *Pmin* representing the minimum price of the service set and an upper limit *Pmax* representing the maximum price of the service set over the past period T.

Instead of determining the occurrence frequencies and price ranges in step 706 to 710 from the leaf node data 82 associated with the current node Nd, in some embodiments, the tree may be browsed a number of times, in particular for each service set, to determine such information directly from the leaf nodes with more accuracy.

In step 712, the occurrence frequencies and the range of unitary prices [*Pmin; Pmax*] determined for each service set of the list of selected service sets may be returned to the Service Determination Commuter 104. The most popular ancillary services and the service price estimations associated with such ancillary services are thus determined in the input context.

While in the pull mode embodiment of figure 6, the occurrence frequency and the price range are returned for only one service set corresponding to the requested set, in the push mode embodiment represented in figure 7, the occurrence frequency and the price range are determined for the selected list of service sets.

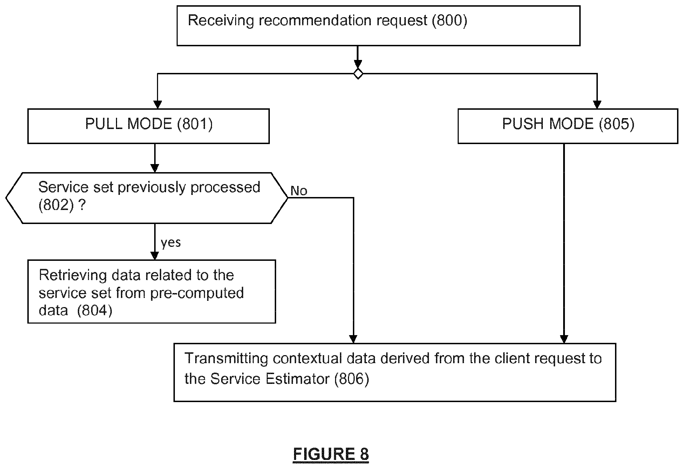

Figure 8 is a flowchart depicting the process of commuting service estimation mode, which may be implemented by the service determination Commuter 104, according to some embodiments.

In step 800, a client request (also called "pre-transaction" or "recommendation" request) is received by the pre-transaction system 10 from a user device 2.

If the client request is received in pull mode (block 801), i.e. the recommendation request does specify a particular service set, in step 802, it is determined if the specified service set has already been processed for similar products using parameters related by the recommendation request (for example in an application of the invention to travel product, it may be determined if the specified service set has already been processed for a same route (defined by an origin/destination)). In one embodiment, this step may be performed by a pre-processing coordinator 130 provided in the MCP 11 in response to a call by the Service Determination Commuter 104.

If it is determined that the service set has already been requested, in step 804, data related to the service set may be retrieved from the pre-processed (or pre-computed) data using the Massive Search Platform (MSP) 13 or from the Service Estimator 102.

Otherwise, the service contextual data related to the recommendation request and the specified service set may be sent to the Service Estimator in step 806.

If the recommendation request is received in push mode (block 801), i.e. the recommendation request does not specify any service set, in step 806, the Service Estimator 102 may be called. This includes transmitting the service contextual data related to the recommendation request and the specified service set to the Service Estimator 102. The Service Estimator 102 may determine the most popular ancillary services and service estimated prices associated with the ancillary services, as described in connection to figure 6.

In one embodiment, the pre-preprocessing coordinator 130 may be further called to determine if the services sets returned by the Service Estimator 102 (most popular ancillary services) have already been pre-processed using real-time data (by MCP 13) in the example of a travel product. If so, the estimated prices associated with the service sets returned by the Service Estimator 102 may be overridden with such pre-processed prices (accurate service prices).

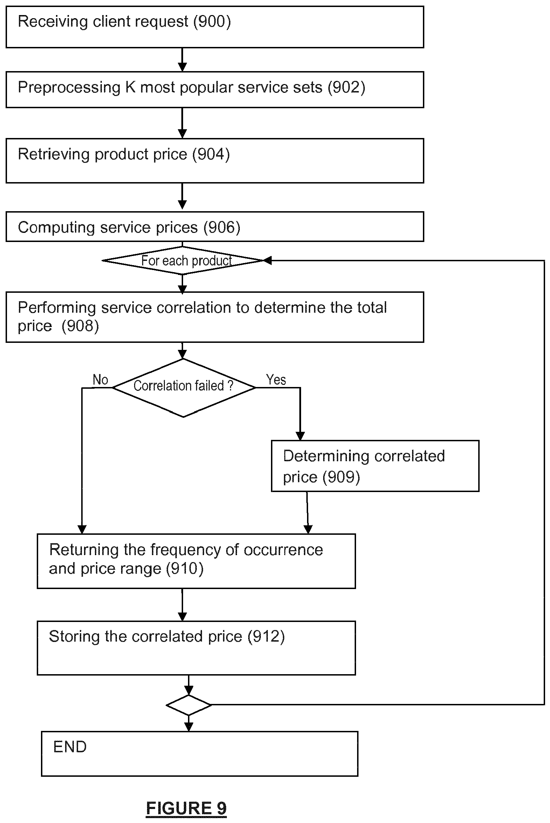

Figure 9 is a flowchart depicting the process of pre-determining services sets which may be implemented by the pre-preprocessing coordinator 130 of the MCP 13 to feed the massive repository 113, for all the origin/destination and set of services, at minimum cost, according to some embodiments.

In step 900, a transaction request (client request) is received by a transaction system 12. The set of $j$ mandatory request parameters predefined for the transaction request format (e.g. route, departure date, stay duration for a travel request) and defined by a $j$ - $uplet$ is assumed to be known (it may be filled by the user or the transaction system 12). The client request may further comprise ancillary service sets to be preprocessed, for each of the j request parameters.

In one embodiment, a preprocessing of the $K$ most popular service sets may be determined by the Service Popularity Calculator 108 using the popularity indicators determined for each service set, for all of the above $j$ - $uplet$ in step 902. Alternatively, preprocessing may be performed for a specific ancillary service set specified in the transaction request by a client.

In order to minimize the cost of the computation, the pre-processing may comprise the following steps:

- In step 904, the Massive Search Platform (MSP) 13 may be called to retrieve the product value (price) associated with the products (e.g. itineraries for a travel request) identified by the client request, without taking into account service values (service price);

- In step 906, the service MCP 16 may be called to compute the service prices for all the services specified in the client request, in a standalone mode (independently of the product);

- In step 908, for each product price and for each service requested by the client request, a service correlation step may be performed to identify if the services priced in standalone mode can be added to the price of the product. If so, the total price of the product (comprising the main product and the service set) may be returned in step 910. In some embodiment the total price thus determined may be stored in the massive repository 113, in step 912;

- In step 909, if the services priced in standalone mode cannot be added to the price of the product (service price applicable to the product pricing), a correlated pricing may be determined (for the product and the service set) by the product MCP 13. The result thus obtained may be stored to the massive repository 113 in step 912.

The process of performing service correlation may be performed by a Service Correlator 18 (shown in figure 3). The Service correlator 18 may be configured to determine if a standalone service price can be attached to a product price (e.g. itinerary price). The Service correlator 18 may provide a correlation service to the pre-processing coordinator 130.

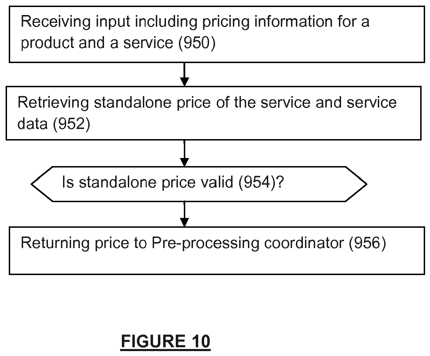

Figure 10 is a flowchart depicting the process of correlating services implemented by the Service Correlator 18, according to some embodiments.

In step 950, an input is received which includes pricing information associated with a product (e.g. full itinerary) and a service to be attached to the product pricing.

In step 952, the result of MCP of services 16 is used to fetch (or retrieve), for the requested service, the standalone price of the service and additional data associated with the service.

In step 954, it is determined if the price associated with the service is applicable to the product pricing (i.e. valid) using an applicability flag pre-computed for the service (the applicability flag may be also called "validity flag"). If so, the price of the service is returned to the Pre-processing coordinator 130 in step 956. Otherwise, if it determined that the service is not applicable to the product pricing, no price is returned to the Pre-processing coordinator 130.

The MCP of services 16 may be configured to determine an applicability flag in association with each service in a pre-processing phase, in a "standalone" operational mode (independently of any recommendation request, and thus independently of any product context). The Service Correlator 18 may use such applicability flag to determine applicability of a service price to a product pricing (as described in connection with Figure 9).

In one embodiment, the MCP of services 16 may comprise a service pricing database for storage of standalone service pricing and the applicability flags associated with services.

For each standalone service pricing requested by the pre-processing coordinator 130, the MCP of service 16 may be configured to compute the price of the service, using predefined rules and/or assumptions. The MCP of service 16 may store the standalone price determined for the service in association with the service in the service pricing database of the MCP of services 16, and possibly additional constraints related to the service (such as for example "Geography", "Cabin", "Fare", "Flights restriction" in an application of the invention to travel delivery). Such additional constraints can be used to determine a matching with product prices.

The pre-transaction system 10 according to the embodiments of the invention enable delivery of ancillary service recommendations to client devices, in a pre-transaction phase, while limiting the computational costs required to produce such service recommendations. This thereby enables a reduction of user requests submitted to the transaction system 12, the user gathering enough information during the pre-transaction phase to better define the requests to be submitted to the transaction system 12. Accordingly, the end user does not need to go back and forth in the transaction flow implemented by the transaction system to detect if a desired service is available and/or if a desired service is too expensive. The load of the transaction system 12 may be thus significantly reduced. Further, the pre-transaction system 10 according to the embodiments of the invention is capable of providing accurate information to the user in the pre-transaction phase.

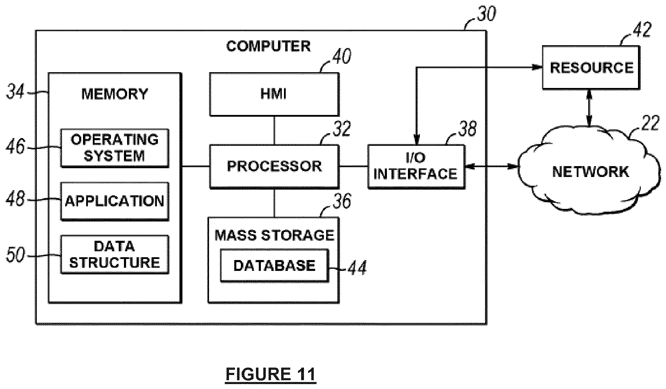

Referring now to figure 11, the different blocks of the pre-transaction system 10 and the user devices 2 of the operating environment may be implemented on one or more computing devices or systems, referred to collectively as a computer, such as computer 30.The computer 30 may include a processor 32, a memory 34, a mass storage memory device 36, an input/output (I/O) interface 38, and a Human Machine Interface (HMI) 39. The computer 30 may also be operatively coupled to one or more external resources 42 via the network 6 (which may be network 21 for example) and/or I/O interface 38. External resources may include, but are not limited to, servers, databases, mass storage devices, peripheral devices, cloud-based network services, or any other suitable computing resource that may used by the computer 30.

The processor 32 may include one or more devices selected from microprocessors, microcontrollers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 34. Memory 34 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 36 may include data storage devices such as a hard drive, optical drive, tape drive, non-volatile solid state device, or any other device capable of storing information. A database 44 may reside on the mass storage memory device 36, and may be used to collect and organize data used by the various systems and modules described herein.

Processor 32 may operate under the control of an operating system 46 that resides in memory 34. The operating system 46 may manage computing resources so that computer program code embodied as one or more computer software applications, such as an application 48 residing in memory 34, may have instructions executed by the processor 32. In an alternative embodiment, the processor 32 may execute the application 48 directly, in which case the operating system 46 may be omitted. One or more data structures 50 may also reside in memory 34, and may be used by the processor 32, operating system 46, and/or application 48 to store or manipulate data.

The I/O interface 38 may provide a machine interface that operatively couples the processor 32 to other devices and systems, such as the network 6 and/or external resource 42. The application 48 may thereby work cooperatively with the network 6 and/or external resource 42 by communicating via the I/O interface 38 to provide the various features, functions, applications, processes, and/or modules comprising embodiments of the invention. The application 48 may also have program code that is executed by one or more external resources 42, or otherwise rely on functions and/or signals provided by other system or network components external to the computer 30. Indeed, given the nearly endless hardware and software configurations possible, persons having ordinary skill in the art will understand that embodiments of the invention may include applications that are located externally to the computer 30, distributed among multiple computers or other external resources 42, or provided by computing resources (hardware and software) that are provided as a service over the network 6, such as a cloud computing service.

The HMI 39 (such as HMI 30 in the implementation of figure 1 of a user device 3) may be operatively coupled to the processor 32 of computer 30 in a known manner to allow a user of the computer 30 to interact directly with the computer 30. The HMI 39 may include video and/or alphanumeric displays, a touch screen, a speaker, and any other suitable audio and visual indicators capable of providing information to the user. The HMI 39 may also include input devices and controls such as an alphanumeric keyboard, a pointing device, keypads, pushbuttons, control knobs, microphones, etc., capable of accepting commands or input from the user and transmitting the entered input to the processor 32.

The database 44 may reside on the mass storage memory device 36, and may be used to collect and organize data used by the various systems and modules described herein. The database 44 may include data and supporting data structures that store and organize the data. In particular, the database 44 may be arranged with any database organization or structure including, but not limited to, a relational database, a hierarchical database, a network database, an object-oriented database, or combinations thereof. A database management system in the form of a computer software application executing as instructions on the processor 32 may be used to access the information or data stored in records of the database 44 in response to a query, where a query may be dynamically determined and executed by the operating system 46, other applications 48, or one or more modules. Although embodiments of the invention may be described herein using relational, hierarchical, network, object-oriented, or other database terminology in specific instances, persons having ordinary skill in the art will understand that embodiments of the invention may use any suitable database management model, and are not limited to any particular type of database.

While the invention has particular advantages for content provider systems that support requests comprising at least some request parameters related to a date, a time and/or a location, such as a travel provider system, the skilled person will readily understand that the invention is not limited to such content provider systems and may be applied to various content provider systems.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

While the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. While the embodiments of figures 6 to 10 have been described according to a particular processing order, the skilled person will readily understand that the invention is not limited to such sequence of steps and that some steps can be implemented in a different order. More generally, in certain alternative embodiments, the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

The I/O interface 38 may provide a machine interface that operatively couples the processor 32 to other devices and systems, such as the network 6 and/or external resource 42. The application 48 may thereby work cooperatively with the network 6 and/or external resource 42 by communicating via the I/O interface 38 to provide the various features, functions, applications, processes, and/or modules comprising embodiments of the invention. The application 48 may also have program code that is executed by one or more external resources 42, or otherwise rely on functions and/or signals provided by other system or network components external to the computer 30. Indeed, given the nearly endless hardware and software configurations possible, persons having ordinary skill in the art will understand that embodiments of the invention may include applications that are located externally to the computer 30, distributed among multiple computers or other external resources 42, or provided by computing resources (hardware and software) that are provided as a service over the network 6, such as a cloud computing service.

The HMI 39 (such as HMI 30 in the implementation of figure 1 of a user device 3) may be operatively coupled to the processor 32 of computer 30 in a known manner to allow a user of the computer 30 to interact directly with the computer 30. The HMI 39 may include video and/or alphanumeric displays, a touch screen, a speaker, and any other suitable audio and visual indicators capable of providing information to the user. The HMI 39 may also include input devices and controls such as an alphanumeric keyboard, a pointing device, keypads, pushbuttons, control knobs, microphones, etc., capable of accepting commands or input from the user and transmitting the entered input to the processor 32.

The database 44 may reside on the mass storage memory device 36, and may be used to collect and organize data used by the various systems and modules described herein. The database 44 may include data and supporting data structures that store and organize the data. In particular, the database 44 may be arranged with any database organization or structure including, but not limited to, a relational database, a hierarchical database, a network database, an object-oriented database, or combinations thereof. A database management system in the form of a computer software application executing as instructions on the processor 32 may be used to access the information or data stored in records of the database 44 in response to a query, where a query may be dynamically determined and executed by the operating system 46, other applications 48, or one or more modules. Although embodiments of the invention may be described herein using relational, hierarchical, network, object-oriented, or other database terminology in specific instances, persons having ordinary skill in the art will understand that embodiments of the invention may use any suitable database management model, and are not limited to any particular type of database.

While the invention has particular advantages for content provider systems that support requests comprising at least some request parameters related to a date, a time and/or a location, such as a travel provider system, the skilled person will readily understand that the invention is not limited to such content provider systems and may be applied to various content provider systems.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

**Claims**

1. A system (10) configured to determine a list of products in response to a client request received from a client device during a request/response session, said client request comprising one or more request parameters, said system (100) comprising a product estimator (11) configured to determine a list of main products, said list of main products comprising one or more main products matching said client request, the system further comprising an auxiliary product estimator (102) configured to determine, in response to the client request, an occurrence frequency and an auxiliary product value information, for each auxiliary product set in a list of auxiliary product sets comprising at least one auxiliary product set, from a tree data structure representing historical data related to sets of auxiliary products, said tree data structure comprising nodes, the system being configured to further output a list of candidate auxiliary products for each main product determined in response to the client request using the occurrence frequency and the auxiliary product information value determined for each auxiliary product set, wherein the system further comprises a auxiliary product learning engine (105) configured to collect learning meta data during an predefined learning period, the system further comprising a tree manager (800) for managing the tree data structure using the collected learning-metadata, wherein the tree data structure (8) comprises a root node and a plurality of levels, each level of the tree data structure corresponding to a parameter derived from one or more request parameters, each node of a given level of the tree data structure comprising a node value representing a value of the parameter corresponding to said level, said value being assigned to the request parameter in said one or more previous request/response sessions over said time period, the last level of each branch of the tree comprising leaf nodes, each leaf node corresponding to a given auxiliary product set.

2. The system of claim 1, wherein said client request is received at a given processing time, and wherein each auxiliary product set comprises one or more auxiliary products related to a main product, said historical data comprising data collected from previous request/response sessions, each previous request/response session being implemented between a client device and a product provider system connected to said auxiliary product estimation database during a predefined time period before said processing time.

3. The system of any preceding claim, wherein each leaf node of the tree data structure corresponding to a given auxiliary product set further comprises a counter value and a value information, said counter value indicating the number of occurrences of said auxiliary product set in said previous request/response sessions, the auxiliary product estimator (102) being configured to determine the occurrence frequency of each auxiliary product set of said list of auxiliary product sets using the counter value of the leaf node corresponding to said auxiliary product set in said tree data structure, the auxiliary product estimator (102) being further configured to determine the auxiliary product value information for each auxiliary product set of said list of auxiliary product sets from the value information of the leaf node corresponding to said auxiliary product set in the tree data structure.

4. The system of claim 3, wherein said value information comprised in each leaf node corresponding to a given auxiliary product set comprises a value range defined by a lower threshold and an upper threshold, the lower threshold representing the lower value assigned to the auxiliary product set in a previous request/response session during said predefined time period and the upper threshold representing the higher value assigned to the auxiliary product set in a previous request/response session during said predefined time period.

5. The system of claim 4, wherein if the client request comprises a request parameter specifying a given auxiliary product set, said list of auxiliary product sets comprises said auxiliary product set, the auxiliary product estimator (102) being configured to browse the tree data structure according to a tree search algorithm to determine a matching node having a path in the tree matching the request parameters of the client request, the auxiliary product estimator (102) being further configured to search for a leaf node in a subtree of the matching node that matches said given auxiliary product set and a threshold condition related to the leaf node occurrence frequency, the occurrence frequency and the auxiliary product value information of the unique auxiliary product set being retrieved from said leaf node.

6. The system of claim 4, wherein if the client request does not comprise a request parameter specifying a given auxiliary product set, the auxiliary product estimator (102) is configured to browse the tree data structure according to a tree search algorithm to determine a matching node having a path in the tree matching the request parameters of the client request, the auxiliary product estimator (102) being further configured to search for all leaf node in a subtree of the matching node, the auxiliary product estimator (102) being configured to determine a popularity indicator for the auxiliary product set associated with each found leaf node and select one or more auxiliary product sets among the auxiliary product sets associated with said found leaf nodes depending on said popularity indicators, said selected auxiliary product sets being added in said list of auxiliary product sets, the occurrence frequency and the value information of each auxiliary product set of said list of auxiliary product sets being retrieved from the corresponding leaf node.

7. The system of claim 6, wherein the system comprises an auxiliary product popularity calculator (108) configured to determine the popularity indicator of each auxiliary product set of a leaf node using the occurrence frequency associated with the leaf node.

8. The system of any preceding claim, wherein the system comprises a pre-processing coordinator (130) configured to update the value information estimated by the auxiliary product estimator (102) for each auxiliary product set of the list of auxiliary product sets from real-time data.

9. The system of any preceding claim, wherein the system comprises an auxiliary product correlator (8) configured to integrate the information value of each auxiliary product set of the list auxiliary product sets to the value of a main product determined by the product estimator (11), depending on an applicability flag.

10. The system of any preceding claim, wherein the tree manager (800) is configured to create a node in the tree data structure in response to the specification of a new value of a parameter corresponding to a level of the tree, in a real-time request/response session, and set the counter value of said node to the value 1.

11. The system of any preceding claim 1 to 9, wherein the tree manager is configured to update a node in the tree data structure each time the value associated with said node is specified in a request/response session for the parameter corresponding to the node level, and increment the counter value of said node.

**12.** The system of any preceding claim, wherein the tree manager is configured to periodically check the configuration of the tree data structure and apply a balancing algorithm to the tree data structure if the tree data structure is unbalanced.

**13.** A method of determining a list of products in response to a client request received from a client device during a request/response session, said client request comprising one or more request parameters, said method comprising a step of determining a list of main products comprising one or more main products matching said client request, wherein the method further comprises determining, in response to the client request, an occurrence frequency and an auxiliary product value information for each auxiliary product set of a list of auxiliary product sets comprising at least one auxiliary product set, from a tree data structure representing historical data related to sets of auxiliary products, said tree data structure comprising nodes, the tree data structure (8) comprising a root node and a plurality of levels, each level of the tree data structure corresponding to a parameter derived from one or more request parameters, each node of a given level of the tree data structure comprising a node value representing a value of the parameter corresponding to said level, said value being assigned to the request parameter in said one or more previous request/response sessions over said time period, the last level of each branch of the tree comprising leaf nodes, each leaf node corresponding to a given auxiliary product set,

the method further comprising outputting a list of candidate auxiliary products for each main product determined in response to the client request using the occurrence frequency and the auxiliary product information value determined for each auxiliary product set,
wherein the method further comprises collecting learning meta data during an predefined learning period, and managing the tree data structure using the collected learning-metadata.

**14.** A computer program product for determining a list of products in response to a client request received from a client device during a request/response session, said client request comprising one or more request parameters, the computer program product comprising:

a non-transitory computer-readable storage medium; and
program code stored on the non-transitory computer-readable storage medium that, when executed by one or more processors, causes the one or more processors to:

- determine a list of main products comprising one or more main products matching said client request,

wherein the one or more processors are further caused to :

- determine, in response to the client request, an occurrence frequency and an auxiliary product value information for each auxiliary product set in a list of auxiliary product sets comprising at least one auxiliary product set, from a tree data structure representing historical data related to sets of auxiliary products, said tree data structure comprising nodes,

the one or more processors being caused to output a list of candidate auxiliary products for each main product determined in response to the client request using the occurrence frequency and the auxiliary product information value determined for each auxiliary product set,
the one or more processors being further caused to collect learning meta data during an predefined learning period, and manage the tree data structure using the collected learning-metadata, wherein the tree data structure (8) comprises a root node and a plurality of levels, each level of the tree data structure corresponding to a parameter derived from one or more request parameters, each node of a given level of the tree data structure comprising a node value representing a value of the parameter corresponding to said level, said value being assigned to the request parameter in said one or more previous request/response sessions over said time period, the last level of each branch of the tree comprising leaf nodes, each leaf node corresponding to a given auxiliary product set.

**Patentansprüche**

**1.** System (10), das dafür konfiguriert ist, als Antwort auf eine Client-Anfrage, die während einer Anfrage/Antwort-Sitzung von einer Client-Vorrichtung empfangen wird, eine Liste von Produkten zu bestimmen, wobei die Client-Anfrage einen oder mehrere Anfrageparameter umfasst, wobei das System (100) einen Produktschätzer (11) umfasst, der dafür konfiguriert ist, eine Liste von Hauptprodukten zu bestimmen, wobei die Liste von Hauptprodukten ein oder mehrere Hauptprodukte umfasst, die mit der Client-Anfrage übereinstimmen, wobei das System ferner einen Zusatzproduktschätzer (102) umfasst, der dafür konfiguriert ist, als Antwort auf die Client-Anfrage eine Vorkommenshäufigkeit und Zusatzproduktwertinformationen für jede Zusatzproduktmenge in einer Liste von Zusatzproduktmengen, die mindestens eine Zusatzproduktmenge umfasst, aus einer Baumdatenstruktur zu bestimmen, die Verlaufsdaten darstellt, die sich auf Mengen von Zusatzprodukten beziehen, wobei die Baumdatenstruktur Knoten umfasst, wobei das System dafür konfiguriert ist, ferner eine Liste von Zusatzproduktkandidaten für jedes Hauptprodukt auszugeben, die als Antwort auf die Client-Anfrage unter Verwendung der Vorkommenshäufigkeit und des Zusatzprodukt-Informationswerts bestimmt wird, die für jede Zusatzproduktmenge bestimmt wurden, wobei das System ferner eine Zusatzprodukt-Lerneinheit (105) umfasst, die dafür konfiguriert ist, Lern-Metadaten während einer vordefinierten Lerndauer zu sammeln, wobei das System ferner einen Baumverwalter (800) zum Verwalten der Baumdatenstruktur unter Verwendung der gesammelten Lern-Metadaten umfasst, wobei die Baumdatenstruktur (8) einen Wurzelknoten und eine Vielzahl von Ebenen umfasst, wobei jede Ebene der Baumdatenstruktur einem Parameter entspricht, der aus einem oder mehreren Anfrageparametern abgeleitet ist, wobei jeder Knoten einer gegebenen Ebene der Baumdatenstruktur einen Knotenwert umfasst, der einen Wert des der Ebene entsprechenden Parameters darstellt, wobei der Wert dem Anfrageparameter in der einen oder den mehreren vorangegangenen Anfrage/Antwort-Sitzungen über die Zeitdauer zugewiesen ist, wobei die letzte Ebene jedes Zweigs des Baums Blattknoten umfasst, wobei jeder Blattknoten einer gegebenen Zusatzproduktmenge entspricht.

2. System nach Anspruch 1, wobei die Client-Anfrage zu einer gegebenen Verarbeitungszeit empfangen wird und wobei jede Zusatzproduktmenge ein oder mehrere Zusatzprodukte umfasst, die sich auf ein Hauptprodukt beziehen, wobei die Verlaufsdaten Daten umfassen, die aus vorherigen Anfrage/Antwort-Sitzungen gesammelt wurden, wobei jede vorherige Anfrage/Antwort-Sitzung zwischen einer Client-Vorrichtung und einem Produktanbietersystem, das mit der Zusatzproduktschätzungsdatenbank verbunden ist, während eines vordefinierten Zeitraums vor der Verarbeitungszeit implementiert wird.

3. System nach einem der vorhergehenden Ansprüche, wobei jeder Blattknoten der Baumdatenstruktur, der einer gegebenen Zusatzproduktmenge entspricht, ferner einen Zählerwert und eine Wertinformation umfasst, wobei der Zählerwert die Anzahl des Vorkommens der Zusatzproduktmenge in den vorherigen Anfrage/Antwort-Sitzungen angibt, wobei der Zusatzproduktschätzer (102) dafür konfiguriert ist, die Vorkommenshäufigkeit jeder Zusatzproduktmenge der Liste von Zusatzproduktmengen unter Verwendung des Zählerwerts desjenigen Blattknotens zu bestimmen, welcher der Zusatzproduktmenge in der Baumdatenstruktur entspricht, wobei der Zusatzproduktschätzer (102) ferner dafür konfiguriert ist, die Zusatzproduktwertinformation für jede Zusatzproduktmenge der Liste von Zusatzproduktmengen aus den Wertinformationen desjenigen Blattknotens zu bestimmen, welcher der Zusatzproduktmenge in der Baumdatenstruktur entspricht.

4. System nach Anspruch 3, wobei die Wertinformationen, die in jedem Blattknoten enthalten sind, der einer gegebenen Zusatzproduktmenge entspricht, einen Wertebereich umfassen, der durch einen unteren Schwellenwert und einen oberen Schwellenwert definiert ist, wobei der untere Schwellenwert den niedrigeren Wert darstellt, welcher der Zusatzproduktmenge in einer vorhergehenden Anfrage/Antwort-Sitzung während des vordefinierten Zeitraums zugewiesen wurde, und der obere Schwellenwert den höheren Wert darstellt, welcher der Zusatzproduktmenge in einer vorhergehenden Anfrage/Antwort-Sitzung während des vordefinierten Zeitraums zugewiesen wurde.

5. System nach Anspruch 4, wobei, wenn die Client-Anfrage einen Anfrageparameter umfasst, der eine gegebene Zusatzproduktmenge festlegt, die Liste von Zusatzproduktmengen die Zusatzproduktmenge umfasst, wobei der Zusatzproduktschätzer (102) dafür konfiguriert ist, die Baumdatenstruktur gemäß einem Baumsuchalgorithmus zu durchsuchen, um einen übereinstimmenden Knoten zu bestimmen, der einen Pfad in dem Baum hat, welcher mit den Anfrageparametern der Client-Anfrage übereinstimmt, wobei der Zusatzproduktschätzer (102) ferner dafür konfiguriert ist, nach einem Blattknoten in einem Teilbaum des übereinstimmenden Knotens zu suchen, der mit der gegebenen Zusatzproduktmenge und einer Schwellenwertbedingung übereinstimmt, die sich auf die Vorkommenshäufigkeit des Blattknotens bezieht, wobei die Vorkommenshäufigkeit und die Zusatzproduktwertinformation der eindeutigen Zusatzproduktmenge aus dem Blattknoten abgerufen werden.

6. System nach Anspruch 4, wobei, wenn die Client-Anfrage keinen Anfrageparameter umfasst, der eine gegebene Zusatzproduktmenge festlegt, der Zusatzproduktschätzer (102) dafür konfiguriert ist, die Baumdatenstruktur gemäß einem Baumsuchalgorithmus zu durchsuchen, um einen übereinstimmenden Knoten zu bestimmen, der einen Pfad in dem Baum hat, welcher mit den Anfrageparametern der Client-Anfrage übereinstimmt, wobei der Zusatzproduktschätzer (102) ferner dafür konfiguriert ist, nach allen Blattknoten in einem Teilbaum des übereinstimmenden Knotens zu suchen, wobei der Zusatzproduktschätzer (102) dafür konfiguriert ist, einen Popularitätsindikator für die Zusatzproduktmenge zu bestimmen, die jedem gefundenen Blattknoten zugeordnet ist, und abhängig von den Popularitätsindikatoren eine oder mehrere Zusatzproduktmengen aus den Zusatzproduktmengen auszuwählen, die den gefundenen Blattknoten zugeordnet sind, wobei die ausgewählten Zusatzproduktmengen der Liste von Zusatzproduktmengen hinzugefügt werden, wobei die Vorkommenshäufigkeit und die Wertinformation jeder Zusatzproduktmenge der Liste von Zusatzproduktmengen aus dem entsprechenden Blattknoten abgerufen werden.

7.  System nach Anspruch 6, wobei das System einen Zusatzprodukt-Popularitätsrechner (108) umfasst, der dafür konfiguriert ist, den Popularitätsindikator jeder Zusatzproduktmenge eines Blattknotens unter Verwendung der dem Blattknoten zugeordneten Vorkommenshäufigkeit zu bestimmen.

8.  System nach einem der vorhergehenden Ansprüche, wobei das System einen Vorverarbeitungskoordinator (130) umfasst, der dafür konfiguriert ist, die durch den Zusatzproduktschätzer (102) geschätzte nWertinformationen für jede Zusatzproduktmenge der Liste von Zusatzproduktmengen aus Echtzeitdaten zu aktualisieren.

9.  System nach einem der vorhergehenden Ansprüche, wobei das System einen Zusatzproduktkorrelator (8) umfasst, der dafür konfiguriert ist, den Informationswert jeder Zusatzproduktmenge der Liste von Zusatzproduktmengen mit dem durch den Produktschätzer (11) bestimmten Wert eines Hauptprodukts zu integrieren, und zwar in Abhängigkeit von einem Anwendbarkeitsflag.

10. System nach einem der vorhergehenden Ansprüche, wobei der Baumverwalter (800) dafür konfiguriert ist, als Antwort auf die Festlegung eines neuen Werts eines Parameters, der einer Ebene des Baumes entspricht, in einer Echtzeit-Anfrage/Antwort-Sitzung einen Knoten in der Baum-Datenstruktur zu erzeugen und den Zählerwert des Knotens auf den Wert 1 zu setzen.

11. System nach einem der vorhergehenden Ansprüche 1 bis 9, wobei der Baumverwalter dafür konfiguriert ist, einen Knoten in der Baumdatenstruktur jedes Mal zu aktualisieren, wenn der dem Knoten zugeordnete Wert in einer Anfrage/Antwort-Sitzung für den der Knotenebene entsprechenden Parameter festgelegt wird, und den Zählerwert des Knotens zu inkrementieren.

12. System nach einem der vorhergehenden Ansprüche, wobei der Baumverwalter dafür konfiguriert ist, die Konfiguration der Baumdatenstruktur periodisch zu überprüfen und einen Ausgleichsalgorithmus auf die Baumdatenstruktur anzuwenden, wenn die Baumdatenstruktur unausgeglichen ist.

13. Verfahren zum Bestimmen einer Liste von Produkten als Antwort auf eine Client-Anfrage, die während einer Anfrage/Antwort-Sitzung von einer Client-Vorrichtung empfangen wird, wobei die Client-Anfrage einen oder mehrere Anfrageparameter umfasst, wobei das Verfahren einen Schritt des Bestimmens einer Liste von Hauptprodukten, die ein oder mehrere mit der Client-Anfrage übereinstimmen Hauptprodukte umfasst, umfasst, wobei das Verfahren ferner umfasst: als Antwort auf die Client-Anfrage erfolgendes Bestimmen einer Vorkommenshäufigkeit und Zusatzproduktwert-Informationen für jede Zusatzproduktmenge einer Liste von Zusatzproduktmengen, die mindestens eine Zusatzproduktmenge umfasst, aus einer Baumdatenstruktur, die Verlaufsdaten darstellt, die sich auf Mengen von Zusatzprodukten beziehen, wobei die Baumdatenstruktur Knoten umfasst, wobei die Baumdatenstruktur (8) einen Wurzelknoten und eine Vielzahl von Ebenen umfasst, wobei jede Ebene der Baumdatenstruktur einem Parameter entspricht, der aus einem oder mehreren Anfrageparametern abgeleitet ist, wobei jeder Knoten einer gegebenen Ebene der Baumdatenstruktur einen Knotenwert umfasst, der einen Wert des der Ebene entsprechenden Parameters darstellt, wobei der Wert dem Anfrageparameter in der einen oder den mehreren vorangegangenen Anfrage/Antwort-Sitzungen über die Zeitdauer zugewiesen ist, wobei die letzte Ebene jedes Zweigs des Baums Blattknoten umfasst, wobei jeder Blattknoten einer gegebenen Zusatzproduktmenge entspricht,

    wobei das Verfahren ferner umfasst: Ausgeben einer Liste von Zusatzproduktkandidaten für jedes als Antwort auf die Client-Anfrage bestimmte Hauptprodukt unter Verwendung der Vorkommenshäufigkeit und des für jede Zusatzproduktmenge bestimmten Zusatzprodukt-Informationswerts,
    wobei das Verfahren ferner umfasst: Sammeln von Lern-Metadaten während einer vordefinierten Lerndauer und Verwalten der Baumdatenstruktur unter Verwendung der gesammelten Lern-Metadaten.

14. Computerprogrammprodukt zum Bestimmen einer Liste von Produkten als Antwort auf eine Client-Anfrage, die während einer Anfrage/Antwort-Sitzung von einer Client-Vorrichtung empfangen wird, wobei die Client-Anfrage einen oder mehrere Anfrageparameter umfasst, wobei das Computerprogrammprodukt umfasst:

ein nichtflüchtiges computerlesbares Speichermedium; und

Programmcode, der auf dem nichtflüchtigen computerlesbaren Speichermedium gespeichert ist, der, wenn er durch einen oder mehrere Prozessoren ausgeführt wird, den einen oder die mehreren Prozessoren veranlasst:

- eine Liste von Hauptprodukten zu bestimmen, die ein oder mehrere mit der Client-Anfrage übereinstimmende Hauptprodukte umfasst,

wobei der eine oder die mehreren Prozessoren ferner veranlasst werden:

- als Antwort auf die Client-Anfrage eine Vorkommenshäufigkeit und Zusatzproduktwertinformationen für jede Zusatzproduktmenge in einer Liste von Zusatzproduktmengen, die mindestens eine Zusatzproduktmenge umfasst, aus einer Baumdatenstruktur zu bestimmen, die Verlaufsdaten darstellt, die sich auf Mengen von Zusatzprodukten beziehen, wobei die Baumdatenstruktur Knoten umfasst,

wobei der eine oder die mehreren Prozessoren veranlasst werden, eine Liste von Zusatzproduktkandidaten für jedes Hauptprodukt auszugeben, die als Antwort auf die Client-Anfrage unter Verwendung der Vorkommenshäufigkeit und des für jede Zusatzproduktmenge bestimmten Zusatzprodukt-Informationswerts bestimmt wird, wobei der eine oder die mehreren Prozessoren ferner veranlasst werden, während einer vordefinierten Lerndauer Lern-Metadaten zu sammeln und die Baumdatenstruktur unter Verwendung der gesammelten Lern-Metadaten zu verwalten, worin die Baumdatenstruktur (8) einen Wurzelknoten und eine Vielzahl von Ebenen umfasst, wobei jede Ebene der Baumdatenstruktur einem Parameter entspricht, der aus einem oder mehreren Anfrageparametern abgeleitet ist, wobei jeder Knoten einer gegebenen Ebene der Baumdatenstruktur einen Knotenwert umfasst, der einen Wert des der Ebene entsprechenden Parameters darstellt, wobei der Wert dem Anfrageparameter in der einen oder den mehreren vorangegangenen Anfrage/Antwort-Sitzungen über die Zeitdauer zugewiesen ist, wobei die letzte Ebene jedes Zweigs des Baums Blattknoten umfasst, wobei jeder Blattknoten einer gegebenen Zusatzproduktmenge entspricht.

## Revendications

1. Un système (10) configuré pour déterminer une liste de produits en réponse à une requête client reçue d'un dispositif client pendant une session de requête/réponse, ladite requête client comprenant un ou plusieurs paramètres de requête, ledit système (100) comprenant un estimateur de produit (11) configuré pour déterminer une liste de produits principaux, ladite liste de produits principaux comprenant un ou plusieurs produits principaux qui correspondent à ladite requête client, le système comprenant en outre un estimateur de produit auxiliaire (102) configuré pour déterminer, en réponse à la requête client, une fréquence d'occurrence et des informations de valeur de produit auxiliaire pour chaque ensemble de produits auxiliaires d'une liste d'ensembles de produits auxiliaires comprenant au moins un ensemble de produits auxiliaires, à partir d'une structure de données en arbre représentant les données historiques associées aux ensembles de produits auxiliaires, ladite structure de données en arbre comprenant des nœuds, le système étant configuré pour délivrer en outre une liste de produits auxiliaires candidats pour chaque produit principal déterminé en réponse à la requête client en utilisant la fréquence d'occurrence et la valeur des informations de produit auxiliaire déterminée pour chaque ensemble de produits auxiliaires, dans lequel le système comprend en outre un moteur d'apprentissage de produits auxiliaires (105) configuré pour collecter des métadonnées d'apprentissage au cours d'une période d'apprentissage prédéfinie, le système comprenant par ailleurs un gestionnaire d'arbre (800) pour gérer la structure de données en arbre en utilisant des métadonnées d'apprentissage collectées, dans lequel la structure de données en arbre (8) comprend un nœud-racine et une pluralité de niveaux, chaque niveau de la structure de données en arbre correspondant à un paramètre dérivé d'un ou plusieurs paramètres de requête, chaque nœud d'un niveau donnée de la structure de données en arbre comprenant une valeur de nœud représentant une valeur du paramètre correspondant audit niveau, ladite valeur étant attribuée au paramètre de requête dans lesdites une ou plusieurs sessions de requête/réponse au cours de ladite période de temps, le dernier niveau de chaque branche de l'arbre comprenant des nœuds-feuilles, chaque nœud-feuille correspondant à un ensemble de produits auxiliaires donné.

2. Système selon la revendication 1, dans lequel ladite requête client est reçue à un instant de traitement donné, et dans lequel chaque ensemble de produits auxiliaires comprend un ou plusieurs produits auxiliaires associés à un produit principal, lesdites données historiques comprenant des données collectées dans des sessions précédentes de requête/réponse, chaque session précédente de requête/réponse étant implémentée entre un dispositif client et un système fournisseur de produit relié à ladite base de données d'estimation de produit auxiliaire sur une période de temps prédéfinie avant ledit instant de traitement.

3. Système selon l'une quelconque des revendications précédentes, dans lequel chaque nœud-feuille de la structure de données en arbre correspondant à un ensemble donné de produits auxiliaires comprend en outre une valeur de compteur et des informations de valeur, ladite valeur de compteur indiquant le nombre d'occurrences dudit ensemble de produits auxiliaires dans lesdites sessions précédentes de requête/réponse, l'estimateur de produit auxiliaire (102) étant configuré pour déterminer la fréquence d'occurrence de chaque ensemble de produits auxiliaires de ladite liste d'ensembles de produits auxiliaires en utilisant la valeur de compteur du nœud-feuille correspondant audit ensemble de produits auxiliaires dans ladite structure de données en arbre, l'estimateur de produit auxiliaire (102) étant en outre configuré pour déterminer les informations de valeur de produit auxiliaire pour chaque ensemble de produits auxiliaires de ladite liste d'ensembles de produits auxiliaires à partir des informations de valeur du nœud-feuille correspondant audit ensemble de produits auxiliaires dans la structure de données en arbre.

4. Système selon la revendication 3, dans lequel lesdites informations de valeur comprises dans chaque nœud-feuille correspondant à un ensemble donné de produits auxiliaires comprennent une plage de valeurs définie par un seuil inférieur et un seuil supérieur, le seuil inférieur représentant la valeur inférieure attribuée à l'ensemble des produits auxiliaires dans une session de requête/réponse précédente au cours de ladite période de temps prédéfinie et le seuil supérieur représentant la valeur la plus élevée attribuée à l'ensemble de produits auxiliaires dans une session de requête/réponse précédente au cours de ladite période de temps prédéfinie.

5. Système selon la revendication 4, dans lequel si la requête client comprend un paramètre de requête spécifiant un ensemble donné de produits auxiliaires, ladite liste d'ensembles de produits auxiliaires comprend ledit ensemble de produits auxiliaires, l'estimateur de produit auxiliaire (102) étant configuré pour parcourir la structure de données en arbre selon un algorithme de recherche d'arbre pour déterminer un nœud correspondant ayant un chemin dans l'arbre correspondant aux paramètres de requête de la requête client, l'estimateur de produit auxiliaire (102) étant en outre configuré pour rechercher un nœud-feuille dans un sous-arbre du nœud correspondant qui correspond audit ensemble donné de produits auxiliaires et une condition de seuil liée à la fréquence d'occurrence du nœud-feuille, la fréquence d'occurrence et les informations de valeur de produit auxiliaire de l'unique ensemble de produits auxiliaires étant récupérées dudit nœud-feuille.

6. Système selon la revendication 4, dans lequel si la requête client ne comprend pas un paramètre de requête spécifiant un ensemble de produits auxiliaires défini, l'estimateur de produit auxiliaire (102) est configuré pour parcourir la structure de données en arbre selon un algorithme de recherche d'arbre pour déterminer un nœud correspondant ayant un chemin dans l'arbre correspondant aux paramètres de requête de la requête client, l'estimateur de produit auxiliaire (102) étant en outre configuré pour rechercher tous les nœuds-feuilles dans un sous-arbre du nœud correspondant, l'estimateur de produit auxiliaire (102) étant configuré pour déterminer un indicateur de popularité de l'ensemble de produits auxiliaires associé à chaque nœud-feuille trouvé et pour choisir un ou plusieurs ensembles de produits auxiliaires parmi les ensembles de produits auxiliaires associés aux dits nœuds-feuilles trouvés en fonction desdits indicateurs de popularité, lesdits ensembles sélectionnés de produits auxiliaires étant ajoutés dans ladite liste des ensembles de produits auxiliaires, la fréquence d'occurrence et les informations de valeur de chaque ensemble de produits auxiliaires de ladite liste d'ensembles de produits auxiliaires étant récupérée du nœud-feuille correspondant.

7. Système selon la revendication 6, dans lequel le système comprend un calculateur de popularité de produits auxiliaires (108) configuré pour déterminer l'indicateur de popularité de chaque ensemble de produits auxiliaires d'un nœud-feuille en utilisant la fréquence d'occurrence associée au nœud-feuille.

8. Système selon l'une quelconque des revendications précédentes, dans lequel le système comprend un coordinateur de prétraitement (130) configuré pour mettre à jour les informations de valeur estimées par l'estimateur de produit auxiliaire (102) pour chaque ensemble de produits auxiliaires de la liste des ensembles de produits auxiliaires à partir de données en temps réel.

9. Système selon l'une quelconque des revendications précédentes, dans lequel le système comprend un corrélateur de produit auxiliaire (8) configuré pour intégrer la valeur des informations de chaque ensemble de produits auxiliaires de la liste d'ensembles de produits auxiliaires à la valeur d'un produit principal déterminé par l'estimateur de produit (11), en fonction d'un indicateur d'applicabilité.

10. Système selon l'une quelconque des revendications précédentes, dans lequel le gestionnaire d'arbre (800) est configuré pour créer un nœud dans la structure des données d'arbre en réponse à la spécification d'une nouvelle valeur d'un paramètre correspondant à un niveau de l'arbre, dans une session de requête/réponse en temps réel, et pour régler la valeur de compteur dudit nœud sur la valeur 1.

11. Système selon l'une quelconque des revendications 1 à 9, dans lequel le gestionnaire d'arbre est configuré pour mettre à jour un nœud dans la structure des données d'arbre à chaque fois que la valeur associée audit nœud est spécifiée dans une session de requête/réponse pour le paramètre correspondant au niveau des nœuds, et pour incrémenter la valeur de compteur dudit nœud.

12. Système selon l'une quelconque des revendications précédentes, dans lequel le gestionnaire d'arbre est configuré pour vérifier périodiquement la configuration de la structure de données en arbre et pour appliquer un algorithme d'équilibrage à la structure de données en arbre, si la structure de données en arbre est déséquilibrée.

13. Procédé pour déterminer une liste de produits en réponse à une requête client reçue d'un dispositif client pendant une session de requête/réponse, ladite requête client comprenant un ou plusieurs paramètres de requête, ledit système comprenant une étape de détermination d'une liste de produits principaux comprenant un ou plusieurs produits principaux correspondants à ladite requête client, dans lequel le procédé comprend en outre la détermination, en réponse à la requête client, d'une fréquence d'occurrence et d'informations de valeur de produit auxiliaire pour chaque ensemble de produits auxiliaires d'une liste d'ensembles de produits auxiliaires comprenant au moins un ensemble de produits auxiliaires, à partir d'une structure de données en arbre représentant des données historiques associées aux ensembles de produits auxiliaires, ladite structure de données en arbre comprenant des nœuds, la structure de données en arbre (8) comprenant un nœud-racine et une pluralité de niveaux, chaque niveau de la structure de données en arbre correspondant à un paramètre dérivé d'un ou plusieurs paramètres de requête, chaque nœud d'un niveau donné de la structure de données en arbre comprenant une valeur de nœud représentant une valeur du paramètre correspondant audit niveau, ladite valeur étant attribuée au paramètre de requête dans lesdites une ou plusieurs sessions de requête/réponse précédentes dans ladite période de temps, le dernier niveau de chaque branche de l'arbre comprenant les nœuds-feuilles, chaque nœud-feuille correspondant à un ensemble donné de produits auxiliaires,

le procédé comprenant en outre le fait de délivrer en sortie une liste de produits auxiliaires candidats pour chaque produit principal déterminé en réponse à la requête client en utilisant la fréquence d'occurrence et la valeur des informations de produit auxiliaire déterminée pour chaque ensemble de produits auxiliaires, dans lequel le procédé comprend en outre la collecte de métadonnées d'apprentissage au cours d'une période d'apprentissage prédéfinie et la gestion de la structure de données en arbre en utilisant des métadonnées d'apprentissage collectées.

14. Produit-programme informatique pour la détermination d'une liste de produits en réponse à une requête client reçue d'un dispositif client pendant une session de requête/réponse, ladite requête client comprenant un ou plusieurs paramètres de requête, le produit de programme informatique comprenant :

un support de stockage non transitoire lisible par ordinateur ; et du code de programme enregistré sur le support de stockage non transitoire lisible par ordinateur qui, lorsqu'il est exécuté par un ou plusieurs processeurs, amène les un ou plusieurs processeurs à :

- déterminer une liste des produits principaux comprenant un ou plusieurs produits principaux correspondant à ladite requête client,

dans lequel les un ou plusieurs processeurs sont en outre amenés à :

- déterminer, en réponse à la requête client, une fréquence d'occurrence et des informations de valeur de produit auxiliaire pour chaque ensemble de produits auxiliaires d'une liste d'ensembles de produits auxiliaires comprenant au moins un ensemble de produits auxiliaires, à partir d'une structure de données en arbre représentant des données historiques associées aux ensembles de produits auxiliaires, ladite structure de données en arbre comprenant des nœuds,

les un ou plusieurs processeurs étant amenés à délivrer en sortie une liste de produits auxiliaires candidats pour chaque produit principal déterminé en réponse à la requête client en utilisant la fréquence d'occurrence et la valeur des informations de produit auxiliaire déterminée pour chaque ensemble de produits auxiliaires,

les un ou plusieurs processeurs étant en outre amenés à collecter des métadonnées d'apprentissage au cours d'une période d'apprentissage prédéfinie et à gérer la structure de données en arbre en utilisant les métadonnées d'apprentissage collectées, dans lequel la structure de données en arbre (8) comprend un nœud-racine et une pluralité de niveaux, chaque niveau de la structure de données en arbre correspondant à un paramètre dérivé d'un ou plusieurs paramètres de requête, chaque nœud d'un niveau donnée de la structure de données en arbre comprenant une valeur de nœud représentant une valeur du paramètre correspondant audit niveau, ladite valeur étant attribuée au paramètre de requête dans lesdites une ou plusieurs sessions de requête/réponse au cours de ladite période de temps, le dernier niveau de chaque branche de l'arbre comprenant des nœuds-feuilles, chaque nœud-feuille correspondant à un ensemble de produits auxiliaires donné.

100

10

101

| Product Estimator (101) |

102

| SERVICE ESTIMATION ENGINE (1) |
| Service Estimator |

103

21

TRANSACTION CONTENT PROVIDER SYSTEM

12

2

CLIENT DEVICE

## FIGURE 1

200

GDS

21

2

CLIENT DEVICE

10

PRE-SHOPPING SYSTEM

12

TRAVEL PROVIDER SYSTEM

Network

201

CARRIER SYSTEM

201

CARRIER SYSTEM

202

TRAVEL AGENCY SYSTEM

## FIGURE 2

100

12
TRANSACTION
CONTENT
PROVIDER SYSTEM

101
104
10

Product Estimator
Service Determination Commuter

800
1

102

11
Office Id,
Market,
Service Set

MSP

SERVICE ESTIMATOR
TREE MANAGER

105
Service
Experience
Learner

113
Massive
Repository

108
103

13
130
MCP
Pre-processing
Coordinator

Service
Popularity
Calculator

Service
Experience DB

MCP of
Services

Service
Correlator

16
18

FIGURE 3

**FIGURE 4**

82

| Set | Occ | Ts | V |
|-----|-----|-----|-----|
| A | 14 | $Ts_A$ | $V_A$ |
| B | 17 | $Ts_B$ | $V_B$ |
| C | 38 | $Ts_C$ | $V_C$ |
| ... | | | |

80-0

80

Level 0

| Set | Occ | .. |
|-----|-----|-----|
| A | 13 | .. |
| B | 10 | .. |
| C | 17 | .. |
| ... | | |

Market :Europe-Europe

Airline:LH
Market : Europe-Europe

Airline:LH Market : BER-France

80-N

Level N

81

| Service set | Occurrence Frequency Occ (% of time) | Value V | Timestamp Ts |
|-------------|----------------------------------------|---------|--------------|
| A={Pet-In-Cabin, Vegetarian meal} | 6 | [34 euros ; 41 euros] | 09/31/2017 |

FIGURE 5

600

Receiving contextual data in PULL MODE

602

Get Node Nd=Top node of the tree

603

Node Nd has a child matching request criteria and meeting the occurrence condition ?

604

yes → Nd=child Node

No

606

Determining the range of unitary prices from node Nd [$Pmin;\ Pmax$]

608

Returning the price range

610

Updating occurrence frequency associated with the service set in the tree

FIGURE 6

700

Receiving contextual data in PUSH MODE

702

Get Node Nd=Top node of the tree

703

Node Nd has a child matching request criteria and meeting the occurrence condition ?

704

yes → Nd=child Node

No

706

Determining frequency of occurrence of each service set below the node Nd

708

Selecting one or more service sets below the node Nd based on the frequency of occurrence

710

Determining the range of unitary prices $[Pmin;\ Pmax]$ associated with the selected service sets

712

Returning the frequency of occurrence and price range for the list of service sets

FIGURE 7

Receiving recommendation request (800)

PULL MODE (801)

PUSH MODE (805)

Service set previously processed (802) ?

No

yes

Retrieving data related to the service set from pre-computed data (804)

Transmitting contextual data derived from the client request to the Service Estimator (806)

**FIGURE 8**

Receiving client request (900)

Preprocessing K most popular service sets (902)

Retrieving product price (904)

Computing service prices (906)

For each product

Performing service correlation to determine the total price (908)

No ← Correlation failed ? → Yes

Determining correlated price (909)

Returning the frequency of occurrence and price range (910)

Storing the correlated price (912)

END

**FIGURE 9**

Receiving input including pricing information for a
product and a service (950)

Retrieving standalone price of the service and service
data (952)

Is standalone price valid (954)?

Returning price to Pre-processing coordinator (956)

**FIGURE 10**

FIGURE 11

**REFERENCES CITED IN THE DESCRIPTION**

**Patent documents cited in the description**

- US 2013073586 A1
- US 20130073586 A1